# EUROPÄISCHE PATENTSCHRIFT

(11) **EP 3 963 838 B1**
(45) Veröffentlichungstag und Bekanntmachung des Hinweises auf die Patenterteilung: **01.06.2022**
(21) Anmeldenummer: 20722560.8
(22) Anmeldetag: 28.04.2020
(51) Int. Cl.: H04L 12/40

(54) **NETZWERKTEILNEHMER UND AUTOMATISIERUNGSNETZWERK**
NETWORK SUBSCRIBER AND AUTOMATION NETWORK
MEMBRE DE RÉSEAU ET RÉSEAU D'AUTOMATISATION

(30) Priorität: 18.06.2019 DE 102019116510
(43) Veröffentlichungstag der Anmeldung: 09.03.2022
(73) Patentinhaber: Beckhoff Automation GmbH, 33415 Verl (DE)
(72) Erfinder: ESSLER, Florian, 90427 Nürnberg (DE); BECKMANN, Guido, 33415 Verl (DE); BECKHOFF, Hans, 33415 Verl (DE); BÜTTNER, Holger, 12205 Berlin (DE); ROSTAN, Martin, 90482 Nürnberg (DE); RETTIG, Thomas, 33378 Rheda-Wiedenbrück (DE); JANSSEN, Dirk, 33415 Verl (DE)
(74) Vertreter: Patentanwaltskanzlei WILHELM & BECK
(86) Internationale Anmeldenummer: PCT/EP2020/061730
(87) Internationale Veröffentlichungsnummer: WO 2020/254020

(56) Entgegenhaltungen:
- EP-A1- 2 501 079
- WO-A1-01/58114
- DE-A1- 10 004 425
- DE-A1-102014 112 082

## Beschreibung

Die Erfindung betrifft einen Netzwerkteilnehmer, der ausgelegt ist, Telegramme mit einer ersten Adressierungstechnik und einer zweiten Adressierungstechnik zu verarbeiten. Weiterhin betrifft die Erfindung ein Automatisierungsnetzwerk, das mehrere Automatisierungsnetzwerkteilnehmer umfasst, wobei wenigstens ein Automatisierungsnetzwerkteilnehmer des Automatisierungsnetzwerks als Netzwerkteilnehmer ausgelegt ist, um Telegramme mit der ersten und der zweiten Adressierungstechnik verarbeiten zu können.

Diese Anmeldung nimmt die Priorität der deutschen Patentanmeldung DE 10 2019 116 510.5 vom 18.06.2019 in Anspruch, deren Inhalt durch Rückbezug vollständig aufgenommen wird.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, dass sich die Netzwerkteilnehmer dieselbe Datenleitung für die Datenübertragung teilen können. Zu diesem Zweck gibt es festgelegte Hierarchien und normierte Datenübertragungsprotokolle.

Meist arbeiten die Feldbussysteme im sogenannten "Master-Slave-Betrieb". Das heißt wenigstens ein Netzwerkteilnehmer ist als Masterteilnehmer ausgebildet und übernimmt die Steuerung der Prozesse, während die übrigen Netzwerkteilnehmer als Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und/oder legen ihre Eingangsdaten in das Telegramm und senden das Telegramm an den Masterteilnehmer zurück.

Häufig werden in Automatisierungsnetzwerken Netzwerkverteiler, sogenannte "Switche" eingesetzt, um die einzelnen Datenleitungen mit den angeschlossenen Netzwerkteilnehmern miteinander zu verbinden und dafür Sorge zu tragen, dass die Daten bzw. Telegramme über die an den einzelnen Ein-/Ausgangs-Ports der Netzwerkverteiler über weitere Datenleitungen angeschlossenen Netzwerkteilnehmer an ihr Ziel gelangen.

In der Regel erfolgt die Datenkommunikation mittels Telegrammen für den Steuerungsbetrieb eines Automatisierungsnetzwerks mit Telegrammen, die eine bestimmte Adressierungstechnik beziehungsweise ein bestimmtes zugrundeliegendes Datenübertragungsprotokoll aufweisen. Hierbei können Telegramme mit einer ersten Adressierungstechnik, als sogenannte "Durchlauftelegramme" verwirklicht sein, wobei hierbei insbesondere das zugrundeliegende EtherCAT Datenübertragungsprotokoll denkbar ist. Bei der Verarbeitung der Telegramme im Durchlauf liest jeder Netzwerkteilnehmer die an ihn adressierten Ausgangsdaten des Telegramms "on the fly" und/oder legt seine Eingangsdaten in das Telegramm, bevor der Netzwerkteilnehmer das Telegramm an den nächsten Netzwerkteilnehmer weiterleitet. Hierbei entspricht das Senden eines Telegramms von einem Netzwerkteilnehmer in einem EtherCAT Netzwerk dem Eintragen von Informationen in das vom Masternetzwerkteilnehmer gesendete Telegramm und das Weiterleiten des Telegramms an einen in Telegrammlaufrichtung nachfolgenden Netzwerkteilnehmer, da ein Netzwerkteilnehmer in einem EtherCAT Netzwerk selbst keine Antworttelegramme auf Anfrage des Masterteilnehmers sendet.

Auch ist in einem derartig ausgebildeten EtherCAT Netzwerk kein Routing der Telegramme, also kein Festlegen von Übertragungswegen zur Übertragung der Telegramme an einen bestimmten Netzwerkteilnehmer erforderlich, wenn der Netzwerkteilnehmer in der Lage ist, das EtherCAT Datenübertragungsprotokoll zu verarbeiten. Grund dafür ist derjenige, dass in einem solchen Automatisierungsnetzwerk die Telegramme stets durch alle Netzwerkteilnehmer geroutet werden und vom letzten Netzwerkteilnehmer, in einer an einer Datenleitung angeschlossenen Kette an Netzwerkteilnehmern, an den Masterteilnehmer zurückgesandt werden.

Alternativ können die Durchlauftelegramme auch vom EtherCAT Datenübertragungsprotokoll abweichend im Automatisierungsnetzwerk verwirklicht sein, zum Beispiel mit zugrundeliegendem Sercos 3 Datenübertragungsprotokoll, also als Sercos 3 Durchlauftelegramme.

Daneben gibt es Automatisierungsnetzwerke, in denen die Datenkommunikation für den Steuerungsbetrieb mittels Telegrammen mit einer zweiten Adressierungstechnik umgesetzt wird. Beispielsweise können die Telegramme mit der zweiten Adressierungstechnik als sogenannte "Einzeltelegramme" verwirklicht sein, also jeweils nur für einen Netzwerkteilnehmer im Automatisierungsnetzwerk zur Verarbeitung bestimmt sein. Denkbar ist hierbei insbesondere, dass die Einzeltelegramme als Ethernet Telegramme, also als Telegramme mit zugrundeliegendem Ethernet Datenübertragungsprotokoll umgesetzt sind, wie zum Beispiel bei PROFINET oder bei OPC-UA. Im sogenannten "DFP-Mode" für PROFINET wird zum Beispiel ein Telegramm, das mehrere Einzeltelegramme umfasst, die jeweils eine eigene Prüfsumme zur Integritätsprüfung von übertragenden Daten aufweisen, wobei die Einzeltelegramme invers zu der Anordnung der Netzwerkteilnehmer im Automatisierungsnetzwerk in dem Telegramm angeordnet sind, an mehrere Netzwerkteilnehmer versendet.

Nachteilig an den Automatisierungsnetzwerken nach dem Stand der Technik ist der Umstand, dass die Datenkommunikation zwischen den Netzwerkteilnehmern des Automatisierungsnetzwerks in der Regel nur für Telegramme mit einer Adressierungstechnik vorgesehen ist. Es ist bisher kein Netzwerkteilnehmer bekannt, der sowohl Telegramme mit einer ersten Adressierungstechnik, die zum Beispiel im Durchlauf von mehreren Netzwerkteilnehmern verarbeitet werden, als auch Telegramme mit einer zweiten Adressierungstechnik, die zum Beispiel nur für einen Netzwerkteilnehmer zur Verarbeitung bestimmt sind, verarbeiten kann.

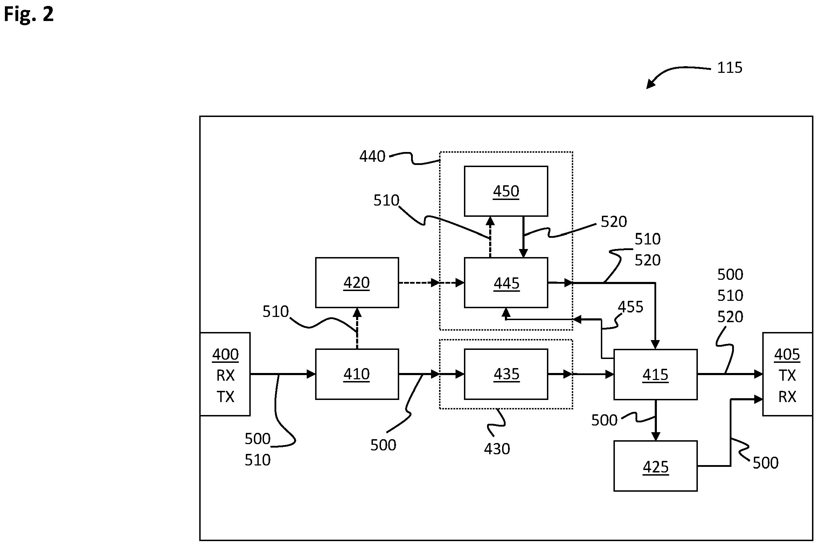

Die Druckschrift WO 01/58114 A1 offenbart offenbart ein Ethernet-Netzwerk mit Redundanz-Funktion. Beispielsweise ist die Redundanz-Steuerung in Fig. 6 der D1 dargestellt, wobei Netzwerkteilnehmer in einer Reihe verschaltet sind und hierbei durchgezogene Linien sowie gestrichelte Linien als Kommunikationskanäle angedeutet sind. Deaktivierte Kommunikationskanäle sind mit gestrichelten Linien visualisiert und die aktivierten mit den durchgezogenen Linien. Für eine Redundanz innerhalb einer Reihe werden die beiden Linienenden, zum Beispiel an den Netzwerkteilnehmern 100 und 107 miteinander verbunden. Im fehlerfreien Zustand wird der Kommunikationskanal deaktiviert und im Fehlerfall dann in den aktiven Zustand versetzt. Voraus-setzung für die Redundanzsteuerung ist eine nicht unterbrochene Linienstruktur. Die Auswahl des aktiven Kommunikationskanals zwischen den Reihen erfolgt mit sogenannten Port-Select-Telegrammen. Diese Telegramme sind solche, die nur innerhalb einer Reihe weitergeleitet werden. Mithilfe der Port-Select-Telegramme soll ein Netzwerkteilnehmer gefunden werden, der mit der benachbarten Reihe verbunden ist und möglichst den kleinsten Abstand von der Reihenmitte aufweist (vgl. Abstract sowie Seite 19, Zeilen 18 bis 37, Seite 20, Zeilen 1 bis 36 und Seite 2, Zeilen 29 bis 37). Weiterhin offenbart die Druckschrift auf Seite 4, Zeilen 25 bis 35 einen Netzwerkteilnehmer als Feldgerät mit vier Ports sowie eine Telegrammweglenkung zwischen den Ports und einem Mikroprozessor-Interface. Der Aufbau eines solchen Netzwerkteilnehmers ist in Fig. 2 sowie auf Seite 8, Zeilen 8 bis 37, bis Seite 17, Zeilen 1 bis 32 offenbart. Ein Media Independent Interface 41 bildet eine Schnittstelle zu einem Baustein 36 zur physikalischen Datenübertragung und umfasst einen Transmit-Function-Block 42 sowie einen Receive-Function-Block 43 und einen in Fig. 2 nicht dargestellten Adress-Filter. Der Adress-Filter führt eine Telegrammfilterung entsprechend Unicast-, Multicast- und Broadcast-Adressen durch, wobei die in einem Telegramm empfangene Zieladresse (DA) mit Filteradressen verglichen wird (vgl. Seite 10, Zeilen 26 bis 37, Seite 11, Zeilen 28 bis 31). Eine Steuereinheit, als sogenannte Switch-Control 46 ausgebildet, steuert die Datenweiterleitung zwischen Ethernet-Kontrollern 28 bis 31 und das Abspeichern von empfangenen Daten. Auf Seite 14, Zeilen 31 bis 35 werden unterschiedliche Adressierungstechniken: Multicast- und Fouldan-Adressierung beschrieben. Zudem wird eine Filterauslegung in Form eines Adressfilters auf Seite 11, Zeilen 28 bis 31 offenbart.

Es ist daher Aufgabe der vorliegenden Erfindung, einen verbesserten Netzwerkteilnehmer bereitzustellen, der flexibel
in Automatisierungsnetzwerken zur Datenkommunikation einsetzbar ist. Es ist weiterhin Aufgabe der Erfindung ein verbessertes Automatisierungsnetzwerk anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Netzwerkteilnehmer und ein zugehöriges Automatisierungsnetzwerk, das Automatisierungsnetzwerkteilnehmer umfasst, die über ein Datenleitungsnetz miteinander verbunden sind, vorgeschlagen. Dabei ist wenigstens ein Automatisierungsnetzwerkteilnehmer als Netzwerkteilnehmer ausgebildet. Der Netzwerkteilnehmer weist wenigstens einen Empfangs-Port und wenigstens einen Sende-Port auf, an die weitere Automatisierungsnetzwerkteilnehmer über das Datenleitungsnetz angeschlossen sein können. Ferner ist wenigstens ein Automatisierungsnetzwerkteilnehmer als Masterteilnehmer ausgelegt, der Telegramme mit einer ersten Adressierungstechnik und Telegramme mit einer zweiten Adressierungstechnik über das Datenleitungsnetz an die Automatisierungsnetzwerkteilnehmer ausgibt. Der vorgeschlagene Netzwerkteilnehmer ist ausgelegt, Telegramme mit der ersten Adressierungstechnik, die zur Verarbeitung im Durchlauf für den Netzwerkteilnehmer und weitere Automatisierungsnetzwerkteilnehmer als Durchlauftelegramme ausgebildet sind, und Telegramme mit der zweiten Adressierungstechnik, die zur Verarbeitung durch einen einzelnen Automatisierungsnetzwerkteilnehmer als Einzeltelegramme ausgebildet sind, über den Empfangs-Port zu empfangen und über den Sende-Port zu versenden, und umfasst eine erste Verarbeitungseinheit zur Verarbeitung der Telegramme mit der ersten Adressierungstechnik und weist eine zweite Verarbeitungseinheit zur Verarbeitung der Telegramme mit der zweiten Adressierungstechnik auf. Weiterhin weist der Netzwerkteilnehmer eine Empfangslogik, die mit dem Empfangs-Port und mit der ersten und der zweiten Verarbeitungseinheit verbunden ist, und eine Sendelogik, die mit dem Sende-Port und mit der ersten und der zweiten Verarbeitungseinheit verbunden ist, auf. Die Empfangslogik ist in einer ersten Filterauslegung ausgelegt, von über den Empfangs-Port empfangene Telegramme mit der ersten Adressierungstechnik an die erste Verarbeitungseinheit und von über den Empfangs-Port empfangene Telegramme mit der zweiten Adressierungstechnik an die zweite Verarbeitungseinheit weiterzuleiten. Die Sendelogik ist ausgelegt, von der ersten Verarbeitungseinheit beziehungsweise von der zweiten Verarbeitungseinheit empfangene Telegramme an den Sende-Port weiterzuleiten. Alternativ ist die Empfangslogik in einer zweiten Filterauslegung ausgelegt, von über den Empfangs-Port empfangene Telegramme mit der ersten Adressierungstechnik oder von über den Empfangs-Port empfangene Telegramme mit der zweiten Adressierungstechnik zu verdoppeln und jeweils ein Telegramm an die erste Verarbeitungseinheit und an die zweite Verarbeitungseinheit weiterzuleiten. Die erste Verarbeitungseinheit ist ausgelegt, Telegramme mit der zweiten Adressierungstechnik zu verwerfen und die zweite Verarbeitungseinheit ist ausgelegt, Telegramme mit der ersten Adressierungstechnik zu verwerfen. Die Sendelogik ist ausgelegt, von der ersten Verarbeitungseinheit beziehungsweise von der zweiten Verarbeitungseinheit empfangene Telegramme an den Sende-Port weiterzuleiten. In einer weiteren Alternative ist die Empfangslogik in einer dritten Filterauslegung ausgelegt, von über den Empfangs-Port empfangene Telegramme mit der ersten Adressierungstechnik und von über den Empfangs-Port empfangene Telegramme mit der zweiten Adressierungstechnik zu verdoppeln und jeweils ein Telegramm an die erste Verarbeitungseinheit und an die zweite Verarbeitungseinheit weiterzuleiten. Die Sendelogik ist ausgelegt, nur Telegramme mit der ersten Adressierungstechnik von der ersten Verarbeitungseinheit an den Sende-Port weiterzuleiten und Telegramme mit der ersten Adressierungstechnik von der zweiten Verarbeitungseinheit zu verwerfen und nur Telegramme mit der zweiten Adressierungstechnik von der zweiten Verarbeitungseinheit an den Sende-Port weiterzuleiten und Telegramme mit der zweiten Adressierungstechnik von der ersten Verarbeitungseinheit zu verwerfen.

Der vorgeschlagene Netzwerkteilnehmer kann sowohl Telegramme mit einer ersten Adressierungstechnik als auch Telegramme mit einer zweiten Adressierungstechnik verarbeiten. Zum Beispiel können die Telegramme mit der ersten Adressierungstechnik als Durchlauftelegramme und die Telegramme mit der zweiten Adressierungstechnik als Einzeltelegramme ausgebildet sein. Dies trägt vorteilhaft dazu bei, dass ein Automatisierungsnetzwerk mit unterschiedlichen Telegrammen von wenigstens einem Masterteilnehmer "versorgt" werden kann. Insbesondere können die Vorteile der beiden Adressierungstechniken in dem vorgeschlagenen Netzwerkteilnehmer kombiniert werden. Vorteilhaft an der Verarbeitung der Telegramme von den Netzwerkeilnehmern im Durchlauf ist vor allen Dingen, dass Prozessdaten schnell und mit wenig Overhead, mit vielen Teilnehmern ausgetauscht werden können. Prozessdaten sind analoge und digitale Werte, die aus einem technischen Prozess mittels Sensoren gewonnen und über den Feldbus an die speicherprogrammierbare Steuerung übergeben werden. Dabei bezeichnet der Begriff Overhead zusätzlichen Daten, die bei der Übermittlung oder Speicherung der Prozessdaten als keine Nutzdaten anfallen. Vorteilhaft an der Ausbildung eines Automatisierungsnetzwerks das mit Einzeltelegrammen "versorgt" wird, ist die vereinfachte Realisierung des Datenaustauschs zwischen den einzelnen Teilnehmern aus einer Leitebene, zum Beispiel vom Masterteilnehmer ausgehend, oder einer Cloud. Eine Cloud bezeichnet eine IT-Infrastruktur, die über ein Rechnernetz, zum Beispiel über das Internet, zur Verfügung gestellt wird, ohne dass diese eine Installation auf einem lokalen Rechner erfordert.

Die einzelnen Komponenten des vorgeschlagenen Netzwerkteilnehmers können als sogenannte "Telegramm-Weichen" fungieren, das heißt sie können die Telegramme gezielt selektieren und an die jeweilige Verarbeitungseinheit weiterleiten, sofern die Empfangslogik als Telegramm-Weiche ausgebildet ist, oder sie können die Telegramme gezielt selektieren und an die Sendelogik weiterleiten, wenn die erste und die zweite Verarbeitungseinheit als Telegramm-Weichen ausgebildet sind, oder sie können die Telegramme gezielt selektiert an den Sende-Port weiterleiten, sofern die Sendelogik als Telegramm-Weiche ausgebildet ist. Zudem ist denkbar, dass die Empfangslogik eine Doppelfunktion erfüllen kann und neben der Eignung für die gezielte Selektion der Telegramme auch dazu ausgelegt ist, ein über den Empfangs-Port empfangenes Telegramm mit der ersten oder zweiten Adressierungstechnik von dem Masterteilnehmer zu verdoppeln und jeweils ein Telegramm an die erste und die zweite Verarbeitungseinheit weiterzuleiten. In dem genannten Fall kann die Empfangslogik beispielsweise zur Verdopplung eines empfangenen Telegramms ausgelegt sein, während die erste und die zweite Verarbeitungseinheit oder die Sendelogik zur eigentlichen Selektion der Telegramme ausgelegt sein können. Die Sendelogik kann überdies gleichermaßen wie die Empfangslogik ausgelegt sein.

Der vorgeschlagene Netzwerkteilnehmer bietet eine flexible Filterungsmöglichkeit durch die einzelnen Komponenten, was oben stehend als die erste bis dritte Filterauslegung erläutert wurde. Somit kann der Netzwerkteilnehmer individuell an die Ausgestaltung des Automatisierungsnetzwerks angepasst werden und kann nach den speziellen Anforderungen eingestellt werden. Auch kann der vorgeschlagene Netzwerkteilnehmer zur Reduktion von Netzwerkkomponenten im Automatisierungsnetzwerk beitragen, ist kompatibel mit bestehenden Automatisierungsnetzwerken und kann einfach in diese integriert werden.

In einer weiteren Ausführungsform ist die Empfangslogik in der ersten Filterauslegung ausgelegt, die Telegramme mit der ersten Adressierungstechnik und die Telegramme mit der zweiten Adressierungstechnik auf der Grundlage einer Ausbildung der Telegramme zu unterscheiden, bei der jeweils ein Kopfabschnitt der Telegramme mit der ersten Adressierungstechnik verschieden von einem Kopfabschnitt der Telegramme mit der zweiten Adressierungstechnik ausgebildet ist. Die erste Verarbeitungseinheit und die zweite Verarbeitungseinheit sind in der zweiten Filterauslegung ausgelegt, die Telegramme mit der ersten Adressierungstechnik und die Telegramme mit der zweiten Adressierungstechnik auf der Grundlage der Ausbildung der Telegramme zu unterscheiden, bei der jeweils der Kopfabschnitt der Telegramme mit der ersten Adressierungstechnik verschieden von dem Kopfabschnitt der Telegramme mit der zweiten Adressierungstechnik ausgebildet sind. Die Sendelogik ist in der dritten Filterauslegung ausgelegt, die Telegramme mit der ersten Adressierungstechnik und die Telegramme mit der zweiten Adressierungstechnik auf der Grundlage der Ausbildung der Telegramme zu unterscheiden, bei der jeweils der Kopfabschnitt der Telegramme mit der ersten Adressierungstechnik verschieden von dem Kopfabschnitt der Telegramme mit der zweiten Adressierungstechnik ausgebildet ist.

Ist der Kopfabschnitt der Telegramme mit der ersten Adressierungstechnik verschieden von dem Kopfabschnitt der Telegramme mit der zweiten Adressierungstechnik ausgebildet, so kann zum frühestmöglichen Zeitpunkt beim Empfang der Telegramme eine Weiterleitungsentscheidung von der Empfangslogik oder der ersten Verarbeitungseinheit und der zweiten Verarbeitungseinheit oder der Sendelogik getroffen werden. Denkbar ist in diesem Zusammenhang, dass die Präambel der Telegramme verschiedenartig ausgebildet ist, da die Präambel in einem Ethernet Datenframe nach dem IEEE 802.3 Standard, den Startabschnitt im Kopfabschnitt eines Telegramms, das dem Ethernet Datenframe Aufbau entspricht, bildet und damit die Basis für eine frühestmögliche Weiterleitungsentscheidung bilden kann. Beispielsweise kann die Bitfolge der Präambel der Telegramme mit der ersten Adressierungstechnik im Kopfabschnitt anders als die Bitfolge der Präambel der Telegramme mit der zweiten Adressierungstechnik im Kopfabschnitt ausgebildet sein. Neben der verschiedenartigen Ausgestaltung der Präambel kann auch generell jedes andere Datenfeld nach dem IEEE 802.3 Ethernet Datenframe Aufbau für die Telegramme mit der ersten und zweiten Adressierungstechnik verschieden voneinander ausgestaltet sein, sodass eine Unterscheidung der Telegramme anhand deren Kopfabschnitte möglich ist.

Die unterschiedliche Ausgestaltung der Kopfabschnitte der Telegramme mit der ersten Adressierungstechnik und der Telegramme mit der zweiten Adressierungstechnik kann in Kombination mit der Eignung der Komponenten als Telegramm-Weichen zudem positiv dazu beitragen, die Verzögerungszeit der Telegramme zu minimieren. Ferner ist die Unterscheidung und Selektion der Telegramme anhand der unterschiedlichen Ausbildung der Kopfabschnitte für sämtliche vorgestellte Filterauslegungen denkbar, auch für die dritte Filterauslegung, bei der die Sendelogik als Telegramm-Weiche ausgelegt ist und dafür eingestellt sein kann, nur Telegramme mit der ersten Adressierungstechnik von der ersten Verarbeitungseinheit an den Sende-Port weiterzuleiten und Telegramme mit der ersten Adressierungstechnik von der zweiten Verarbeitungseinheit zu verwerfen und nur Telegramme mit der zweiten Adressierungstechnik von der zweiten Verarbeitungseinheit an den Sende-Port weiterzuleiten und Telegramme mit der zweiten Adressierungstechnik von der ersten Verarbeitungseinheit zu verwerfen. Es ist denkbar, die einzelnen Komponenten in einer Konfigurationsphase durch den Masterteilnehmer dahingehend einzustellen, sodass diese einen Kopfabschnitt eines Telegramms mit der ersten Adressierungstechnik von einem Kopfabschnitt eines Telegramms mit der zweiten Adressierungstechnik unterscheiden können.

Gemäß einer weiteren Ausführungsform ist die Empfangslogik, in der ersten Filterauslegung ausgelegt, die Telegramme mit der ersten Adressierungstechnik und die Telegramme mit der zweiten Adressierungstechnik auf der Grundlage eines festgelegten Zeitfensters, in dem jeweils Telegramme mit der ersten Adressierungstechnik beziehungsweise Telegramme mit der zweiten Adressierungstechnik über den Empfangs-Port von der Empfangslogik empfangen werden, zu unterscheiden. In der zweiten Filterauslegung sind die erste Verarbeitungseinheit und die zweite Verarbeitungseinheit ausgelegt, die Telegramme mit der ersten Adressierungstechnik und die Telegramme mit der zweiten Adressierungstechnik auf der Grundlage des festgelegten Zeitfensters, in dem jeweils Telegramme mit der ersten Adressierungstechnik beziehungsweise Telegramme mit der zweiten Adressierungstechnik über den Empfangs-Port von der Empfangslogik empfangen werden, zu unterscheiden. In der dritten Filterauslegung, ist die Sendelogik ausgelegt, die Telegramme mit der ersten Adressierungstechnik und der zweiten Adressierungstechnik auf der Grundlage des festgelegten Zeitfensters, in dem jeweils Telegramme mit der ersten Adressierungstechnik beziehungsweise Telegramme mit der zweiten Adressierungstechnik über den Empfangs-Port von der Empfangslogik empfangen werden, zu unterscheiden.

Das festgelegte Zeitfenster kann beispielsweise als ein sich zyklisch wiederholendes Zeitfenster vom Masterteilnehmer für die erste und dritte Filterauslegung konfiguriert sein, bei der die Empfangslogik zur Selektion und gezielten Weiterleitung der Telegramme an die erste Verarbeitungseinheit und an die zweite Verarbeitungseinheit zur Verarbeitung der Telegramme und bei der die Sendelogik zur Selektion und gezielten Weiterleitung der Telegramme, von der ersten Verarbeitungseinheit oder von der zweiten Verarbeitungseinheit, an den Sende-Port ausgelegt sind. Auch ist denkbar, dass das festgelegte Zeitfenster für die zweite Filterauslegung konfiguriert ist, bei dem die erste Verarbeitungseinheit Telegramme mit der zweiten Adressierungstechnik verwirft und die zweite Verarbeitungseinheit Telegramme mit der ersten Adressierungstechnik verwirft. Dabei kann das festgelegte Zeitfenster zum Beispiel dem Zeitfenster entsprechen, in dem die erste Verarbeitungseinheit Telegramme mit der zweiten Adressierungstechnik verwirft, wenn in dem festgelegten Zeitfenster zum Beispiel nur Telegramme mit der ersten Adressierungstechnik durch die erste Verarbeitungseinheit an die Sendelogik weitergeleitet werden sollen. Ähnliches gilt für das festgelegte Zeitfenster in Bezug auf die zweite Verarbeitungseinheit.

Beispielsweise kann sich ein Vorgang alle 1 ms zyklisch wiederholen. Es ist denkbar, dass der Masterteilnehmer das Zeitfenster auf 1 ms festlegt und dieses in ein erstes Zeitfenster mit 500 µs und ein zweites Zeitfenster mit weiteren 500 µs unterteilt. Hierbei können im ersten Zeitfenster zum Beispiel Telegramme mit der ersten Adressierungstechnik vom Masterteilnehmer ausgegeben werden, während im zweiten Zeitfenster Telegramme mit der zweiten Adressierungstechnik vom Masterteilnehmer oder einem weiteren Masterteilnehmer ausgegeben werden. In der Regel verarbeitet die erste Verarbeitungseinheit ein Telegramm mit der zweiten Adressierungstechnik nicht, da die Telegramme mit der zweiten Adressierungstechnik ein Datenfeld im Kopfabschnitt der Telegramme aufweisen, das als Typfeld (Ethertype) ausgebildet ist, das von dem Typfeld im Kopfabschnitt der Telegramme mit der ersten Adressierungstechnik abweicht. Das Typfeld umfasst jeweils einen Wert, der ein verwendetes Protokoll einer nächsthöheren Schicht innerhalb von Nutzdaten angibt, wobei eine Schicht und eine nächsthöhere Schicht nach dem OSI-Modell (OSI: Open Systems Interconnection), also dem Referenzmodell für Datenübertragungsprotokolle in einer Schichtenarchitektur, definiert sind. Beispielsweise weist das Typfeld den Wert 0x88A4 (im Hexadezimalsystem) auf, wenn das Telegramm mit der ersten Adressierungstechnik als Durchlauftelegramm und hierbei insbesondere als EtherCAT Telegramm ausgebildet ist, da dieser Wert mit dem echtzeitfähigen EtherCAT Datenübertragungsprotokoll verknüpft ist.

Die Erfindung ist jedoch nicht auf das vorgestellte Beispiel beschränkt, da das Zeitfenster auch davon abweichend und gegebenenfalls ohne weitere Unterteilung festgelegt werden kann. Zudem ist denkbar, dass die Einstellung des Zeitfensters vom Masterteilnehmer auch verändert werden kann.

In einer weiteren Ausführungsform ist die Empfangslogik in der ersten Filterauslegung ausgelegt, die Telegramme mit der ersten Adressierungstechnik und die Telegramme mit der zweiten Adressierungstechnik auf der Grundlage eines Umschalttelegramms zu unterscheiden, mit dem das Weiterleiten von über den Empfangs-Port empfangenen Telegrammen mit der ersten Adressierungstechnik an die erste Verarbeitungseinheit oder von über den Empfangs-Port empfangenen Telegrammen mit der zweiten Adressierungstechnik an die zweite Verarbeitungseinheit durch die Empfangslogik umgeschaltet wird. Die erste Verarbeitungseinheit und die zweite Verarbeitungseinheit sind in der zweiten Filterauslegung ausgelegt, die Telegramme mit der ersten Adressierungstechnik und die Telegramme mit der zweiten Adressierungstechnik auf der Grundlage des Umschalttelegramms zu unterscheiden, mit dem das Weiterleiten von Telegrammen mit der ersten Adressierungstechnik an die Sendelogik durch die erste Verarbeitungseinheit umgeschaltet wird oder mit dem das Weiterleiten von Telegrammen mit der zweiten Adressierungstechnik an die Sendelogik durch die zweite Verarbeitungseinheit umgeschaltet wird. Die Sendelogik ist in der dritten Filterauslegung ausgelegt, die Telegramme mit der ersten Adressierungstechnik und die Telegramme mit der zweiten Adressierungstechnik auf der Grundlage des Umschalttelegramms zu unterscheiden, mit dem das Weiterleiten der von der ersten Verarbeitungseinheit empfangenen Telegramme mit der ersten Adressierungstechnik an den Sende-Port oder der von der zweiten Verarbeitungseinheit empfangenen Telegramme mit der zweiten Adressierungstechnik an den Sende-Port durch die Sendelogik umgeschaltet wird.

Mithilfe des vorgeschlagenen Umschalttelegramms können die Empfangs- und die Sendelogik gezielt als Telegramm-Weichen zur Selektion der Telegramme mit der ersten Adressierungstechnik und der Telegramme mit der zweiten Adressierungstechnik eingestellt werden. Das Umschalttelegramm wird dabei beispielsweise als Telegramm mit der ersten Adressierungstechnik über die erste Verarbeitungseinheit vom Masterteilnehmer an die Sendelogik versendet, wobei der Sendelogik damit angezeigt wird, dass die Sendelogik die "Weiche" nachfolgend auf das Umschalttelegramm auf den Empfang von Telegrammen mit der zweiten Adressierungstechnik von der zweiten Verarbeitungseinheit umstellen soll. Die Sendelogik kann zwei Eingangs-Ports aufweisen, wobei ein erster Eingangs-Port mit der ersten Verarbeitungseinheit und ein zweiter Eingangs-Port mit der zweiten Verarbeitungseinheit verbunden ist. In dem genannten Beispiel, werden vor dem Versenden des Umschalttelegramms zum Beispiel die Telegramme mit der zweiten Adressierungstechnik verworfen, als auch die Telegramme mit der ersten Adressierungstechnik verworfen werden, die von der Sendelogik über den zweiten Eingangs-Port der Sendelogik von der zweiten Verarbeitungseinheit empfangen werden. Mit dem Umschalttelegramm werden danach die Telegramme mit der ersten Adressierungstechnik von der ersten Verarbeitungseinheit, die die Sendelogik auf deren erstem Eingangs-Port erreichen, und die Telegramme mit der ersten Adressierungstechnik von der zweiten Verarbeitungseinheit, die die Sendlogik auf deren zweitem Eingangs-Port erreichen, von der Sendelogik verworfen. Ferner verwirft die Sendlogik Telegramme mit der zweiten Adressierungstechnik von der ersten Verarbeitungseinheit. Die Sende- und die Empfangslogik können darüber hinaus abweichend von der oben stehenden Erläuterung eingestellt sein. Die Empfangslogik kann hingegen zum Beispiel nur einen Eingangs-Port aufweisen, über den die Empfangslogik das Umschalttelegramm von dem Masterteilnehmer empfangen kann.

Darüber hinaus können auch die erste Verarbeitungseinheit und die zweite Verarbeitungseinheit mithilfe des vorgeschlagenen Umschalttelegramms gezielt als Telegramm-Weichen eingestellt werden.

Gemäß einer weiteren Ausführungsform sind die Telegramme mit der ersten Adressierungstechnik als Durchlauftelegramme, zur Verarbeitung durch mehrere Automatisierungsnetzwerkteilnehmer und die Telegramme mit der zweiten Adressierungstechnik als Einzeltelegramme, zur Verarbeitung jeweils durch einen einzelnen Automatisierungsnetzwerkteilnehmer verwirklicht. Die zweite Verarbeitungseinheit des Netzwerkteilnehmers prüft jeweils anhand einer Zieladresse der Einzeltelegramme, ob ein Einzeltelegramm für den Netzwerkteilnehmer bestimmt ist. Sofern die Zieladresse eines Einzeltelegramms jeweils mit einer Hardware-Adresse des Netzwerkteilnehmers übereinstimmt, ist die zweite Verarbeitungseinheit ausgelegt, das Einzeltelegramm zu verarbeiten. Die zweite Verarbeitungseinheit ist andernfalls ausgelegt, das Einzeltelegramm an die Sendelogik zur Ausgabe über den Sende-Port weiterzuleiten.

Sind die Telegramme mit der ersten Adressierungstechnik als Durchlauftelegramme und die Telegramme mit der zweiten Adressierungstechnik als Einzeltelegramme verwirklicht, so bleibt die Verzögerungszeit der Telegramme in vorteilhafter Weise kalkulierbar. Denn die Einzeltelegramme müssen so lange verzögert werden, bis jeweils die Zieladresse der Einzeltelegramme empfangen worden ist, damit die zweite Verarbeitungseinheit auswerten kann, ob der Netzwerkteilnehmer mit dem Telegramm adressiert ist oder nicht. Das heißt Einzeltelegramme können bis zum Empfang der Zieladresse, die gleichermaßen wie die Hardware-Adresse des Netzwerkteilnehmers jeweils als MAC-Adresse (MAC: Media Access Control) ausgebildet sein kann, in der Speichereinheit des Netzwerkteilnehmers zwischen gespeichert werden. Während die Durchlauftelegramme zum Beispiel lediglich durch die Durchlaufverzögerungszeit verzögert werden. Damit ist die Zeit gemeint, die für den Durchlauf eines Durchlauftelegramms durch den Netzwerkteilnehmer erforderlich ist. Ein Durchlauftelegramm, insbesondere für den Fall, dass dieses als EtherCAT Telegramm ausgebildet ist, muss insbesondere nicht beim Empfang des Telegramms zwischengespeichert werden, sondern kann instantan (on the fly) von dem Netzwerkteilnehmer von der ersten Verarbeitungseinheit verarbeitet werden.

Durch die Ausgestaltung der Telegramme sowie des vorgeschlagenen Netzwerkteilnehmers kann in vorteilhafter Weise eine Einzel-Netzwerkteilnehmer Adressierung mit einer Mehrfach-Netzwerkteilnehmer Adressierung in einem Automatisierungsnetzwerk kombiniert werden, wobei eine Mehrfach-Netzwerkteilnehmer Adressierung hierbei auf das Ansprechen bzw. Adressieren von mehreren Netzwerkteilnehmern im Automatisierungsnetzwerk bezogen ist. Zum Beispiel kann der Masterteilnehmer damit gezielt einen einzelnen Netzwerkteilnehmer adressieren, um Diagnosedaten des Netzwerkteilnehmers anzufordern, während dieser gleichzeitig mit im Steuerungsbetrieb eingebunden sein kann, um zum Beispiel Durchlauftelegramme zu verarbeiten und diese anschließend an den nächsten Teilnehmer zur Verarbeitung zu versenden.

In einer weiteren Ausführungsform sind die Durchlauftelegramme als EtherCAT Telegramme und die Einzeltelegramme als Ethernet Telegramme ausgebildet. Damit kann in vorteilhafter Weise der bekannte EtherCAT Standard sowie der bekannte Ethernet Standard für den Aufbau der Telegramme genutzt werden. Insbesondere werden dadurch Kompatibilitätsprobleme zu bestehenden Systemen, die die bekannten Standards verwenden, vermieden.

Gemäß einer weiteren Ausführungsform ist die zweite Verarbeitungseinheit ausgelegt, Telegramme mit der zweiten Adressierungstechnik zu erzeugen und die Telegramme mit der zweiten Adressierungstechnik an die Sendelogik zur Ausgabe über den Sende-Port weiterzuleiten. Die Erfindung ist nicht auf den Empfang von Telegrammen mit der ersten Adressierungstechnik und Telegrammen mit der zweiten Adressierungstechnik beschränkt, sondern der Netzwerkteilnehmer kann auch eigenständig Telegramme mit der zweiten Adressierungstechnik mithilfe der zweiten Verarbeitungseinheit erzeugen und diese über den Sende-Port versenden. Sind die Telegramme mit der ersten Adressierungstechnik als Durchlauftelegramme und insbesondere als EtherCAT Telegramme ausgebildet, so erzeugt der vorgeschlagene Netzwerkteilnehmer in der Regel kein eigenständiges EtherCAT Telegramm über die erste Verarbeitungseinheit und versendet dieses. Denn die Netzwerkteilnehmer in einem EtherCAT Netzwerk sind nur dazu ausgelegt, Informationen in die vom Masterteilnehmer erzeugten EtherCAT Telegramme zu legen bzw. Informationen aus den vom Masterteilnehmer erzeugten EtherCAT Telegrammen auszulesen. Sind die Durchlauftelegramme jedoch nicht als EtherCAT Telegramme ausgebildet, so kann zum Beispiel auch die erste Verarbeitungseinheit ausgelegt sein, Durchlauftelegramme zu erzeugen.

In einer weiteren Ausführungsform ist der Netzwerkteilnehmer ausgelegt, wenn der Netzwerkteilnehmer gleichzeitig über den Empfangs-Port ein Telegramm mit der ersten Adressierungstechnik oder ein Telegramm mit der zweiten Adressierungstechnik empfängt, das über den Empfangs-Port empfangene Telegramm mit der ersten Adressierungstechnik oder das über den Empfangs-Port empfangene Telegramm mit der zweiten Adressierungstechnik zwischen zu speichern. Die Sendelogik ist ausgelegt, das von der zweiten Verarbeitungseinheit erzeugte Telegramm mit der zweiten Adressierungstechnik zur Ausgabe über den Sende-Port weiterzuleiten. In einer Alternative dazu, ist der Netzwerkteilnehmer ausgelegt, wenn der Netzwerkteilnehmer gleichzeitig über den Empfangs-Port ein Telegramm mit der ersten Adressierungstechnik oder ein Telegramm mit der zweiten Adressierungstechnik empfängt, das von der zweiten Verarbeitungseinheit erzeugte Telegramm mit der zweiten Adressierungstechnik zu fragmentieren und das über den Empfangs-Port empfangene Telegramm mit der ersten Adressierungstechnik durch die Sendelogik zur Ausgabe über den Sende-Port weiterzuleiten oder das über den Empfangs-Port empfangene Telegramm mit der zweiten Adressierungstechnik durch die Sendelogik zur Ausgabe über den Sende-Port weiterzuleiten.

Ist der Netzwerkteilnehmer, also die zweite Verarbeitungseinheit ausgelegt, Telegramme mit der zweiten Adressierungstechnik zu erzeugen, so kann es vorkommen, dass der Netzwerkteilnehmer während des Sendevorgangs eines erzeugten Telegramms mit der zweiten Adressierungstechnik über den Sende-Port, gleichzeitig ein Telegramm mit der ersten Adressierungstechnik oder ein Telegramm mit der zweiten Adressierungstechnik von dem Masterteilnehmer über den Empfangs-Port empfängt. Es ist denkbar, dass das über den Empfangs-Port empfangene Telegramm mit der ersten Adressierungstechnik oder das Telegramm mit der zweiten Adressierungstechnik in einer weiteren Speichereinheit des Netzwerkteilnehmers, die zum Beispiel mit der Sendelogik verbunden sein kann, zwischengespeichert wird. Auch ist denkbar, dass der Netzwerkteilnehmer eine zentrale Speichereinheit umfasst, die sowohl mit der Sendelogik als auch mit der Empfangslogik verbunden ist. Im Fall der Zwischenspeicherung des empfangenen Telegramms kann der Sendevorgang des von der zweiten Verarbeitungseinheit erzeugten Telegramms ohne Unterbrechung fortgesetzt werden.

Alternativ dazu ist ebenfalls denkbar, dass den Telegrammen im Automatisierungsnetzwerk ein Prioritätswert zugeordnet ist und zum Beispiel die über den Empfangs-Port empfangenen Telegramme mit der ersten Adressierungstechnik oder die empfangenen Telegramme mit der zweiten Adressierungstechnik höher priorisiert sind, zum Beispiel über einen ersten Prioritätswert, der höher als ein zweiter Prioritätswert, für die von der zweiten Verarbeitungseinheit erzeugten Telegramme mit der zweiten Adressierungstechnik ausgebildet ist. In dem geschilderten Beispiel mit den zugeordneten Prioritätswerten kann der Netzwerkteilnehmer den Sendevorgang des erzeugten Telegramms mit der zweiten Adressierungstechnik über den Sende-Port des Netzwerkteilnehmers unterbrechen, das Telegramm also fragmentieren und in der weiteren Speichereinheit zwischenspeichern. Der Netzwerkteilnehmer kann das zwischengespeicherte, von der zweiten Verarbeitungseinheit erzeugte Telegramm, erst dann über den Sende-Port versenden, wenn zum Beispiel die Übertragung des über den Empfangs-Port empfangenen Telegramms vollständig abgeschlossen ist. Im Zusammenhang mit dem Fragmentieren des von der zweiten Verarbeitungseinheit erzeugten Telegramms mit der zweiten Adressierungstechnik ist auch die Möglichkeit des mehrfachen Fragmentierens denkbar, sofern beim Sendevorgang eines Fragments über den Sende-Port des Netzwerkteilnehmers erneut von dem Netzwerkteilnehmer ein höher priorisiertes Telegramm mit der ersten oder zweiten Adressierungstechnik über den Empfangs-Port empfangen wird.

In einer weiteren Ausführungsform ist die Sendelogik des Netzwerkteilnehmers ausgelegt, wenn der Netzwerkteilnehmer gleichzeitig über den Empfangs-Port ein Telegramm mit der ersten Adressierungstechnik oder ein Telegramm mit der zweiten Adressierungstechnik empfängt, das über den Empfangs-Port empfangene Telegramm mit der ersten Adressierungstechnik oder das über den Empfangs-Port empfangene Telegramm mit der zweiten Adressierungstechnik zwischen zu speichern. Weiterhin ist die Sendelogik ausgelegt, das von der zweiten Verarbeitungseinheit erzeugte Telegramm mit der zweiten Adressierungstechnik zur Ausgabe über den Sende-Port weiterzuleiten. In einer Alternative dazu, ist die Sendelogik ausgelegt, wenn der Netzwerkteilnehmer gleichzeitig über den Empfangs-Port ein Telegramm mit der ersten Adressierungstechnik oder ein Telegramm mit der zweiten Adressierungstechnik empfängt, das von der zweiten Verarbeitungseinheit erzeugte Telegramm mit der zweiten Adressierungstechnik zu fragmentieren und das über den Empfangs-Port empfangene Telegramm mit der ersten Adressierungstechnik zur Ausgabe über den Sende-Port weiterzuleiten oder das über den Empfangs-Port empfangene Telegramm mit der zweiten Adressierungstechnik zur Ausgabe über den Sende-Port weiterzuleiten. Dabei können die oben genannten Merkmale im Zusammenhang mit der Auslegung des Netzwerkteilnehmers gleichermaßen für die Auslegung der Sendelogik gelten und werden an dieser Stelle nicht wiederholt.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkteilnehmern, das für eine Ausführung eines Verfahrens zur Datenübertragung ausgelegt ist;
Figur 2 einen schematischen Aufbau eines Netzwerkteilnehmers in Figur 1, der ausgelegt ist Telegramme mit einer ersten und einer zweiten Adressierungstechnik zu verarbeiten; und
Figur 3 eine schematische Darstellung einer ersten bis dritten Filterauslegung zur Filterung der Telegramme mit der ersten und der zweiten Adressierungstechnik durch den in Figur 2 dargestellten Netzwerkteilnehmer.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke sind üblicherweise als Feldbussysteme verwirklicht, bei denen die Automatisierungsnetzwerkeilnehmer über den Feldbus miteinander vernetzt sind. Die Automatisierungsnetzwerkteilnehmer können als ein Masterteilnehmer, als ein Netzwerkverteiler sowie als mehrere Netzwerkteilnehmer, beziehungsweise Slaveteilnehmer, ausgebildet sein. Die genannten Automatisierungsnetzwerkteilnehmer können dazu ausgelegt sein, mit Steuerungseinheiten Daten auszutauschen. In der Regel wird der Telegrammverkehr der Automatisierungsnetzwerkteilnehmer für den Steuerungsbetrieb mithilfe von Telegrammen mit einer einheitlichen Adressierungstechnik umgesetzt, die von allen Automatisierungsnetzwerkteilnehmern in dem Automatisierungsnetzwerk verarbeitet werden können. Automatisierungsnetzwerke mit Automatisierungsnetzwerkteilnehmern, die einen sogenannten "Mischbetrieb" ermöglichen, also Netzwerkteilnehmer, die ausgelegt sind, sowohl Telegramme mit einer ersten Adressierungstechnik, beziehungsweise einem ersten zugrundeliegenden Datenübertragungsprotokoll, als auch Telegramme mit einer zweiten Adressierungstechnik, beziehungsweise einem zweiten zugrundeliegenden Datenübertragungsprotokoll, zu verarbeiten sind bislang nicht bekannt.

Der Kern der Erfindung liegt daher in der Entwicklung eines Netzwerkteilnehmers, der in der Lage ist, Telegramme mit einer ersten Adressierungstechnik verarbeiten zu können, wobei die Telegramme hierbei beispielsweise als sogenannte "Durchlauftelegramme" ausgebildet sind und von dem Netzwerkteilnehmer und den nachfolgenden Automatisierungsnetzwerkteilnehmern im Durchlauf verarbeitet werden, gleichermaßen wie auch Telegramme mit einer zweiten Adressierungstechnik verarbeiten zu können, wobei die Telegramme hierbei zum Beispiel als sogenannte "Einzeltelegramme" ausgebildet sind und jeweils von einem Netzwerkteilnehmer, für den ein Einzeltelegramm bestimmt ist, verarbeitet werden. Der erfindungsgemäße Netzwerkteilnehmer kann darüber hinaus auch dazu ausgelegt sein, weitere Telegramme mit weiteren Adressierungstechniken zu verarbeiten, da es denkbar ist, dass im Automatisierungsnetzwerk weitere Telegramme mit weiteren Adressierungstechniken ausgegeben werden.

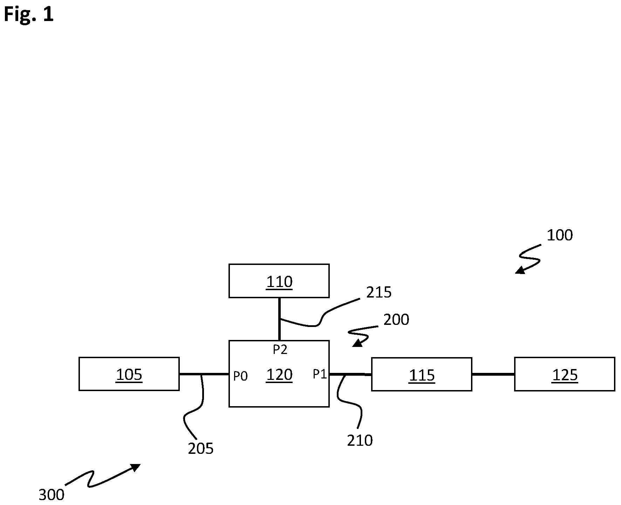

Der Aufbau und die Funktionsweise des erfindungsgemäßen Netzwerkteilnehmers und des Automatisierungsnetzwerks wird nachfolgend anhand der Figuren 1 bis 3 beschrieben, wobei in der Beschreibung, sofern sinnvoll und erforderlich, die zugehörigen Bezugszeichen aus den drei Figuren Verwendung finden. Wird nachfolgend von Telegrammen mit einer ersten Adressierungstechnik 500 sowie von Telegrammen mit einer zweiten Adressierungstechnik 510 gesprochen, so sind damit stets auch einzelne Telegramme mit der ersten Adressierungstechnik als auch einzelne Telegramme mit der zweiten Adressierungstechnik mit umfasst. Umgekehrt sind auch nachfolgend bei der Verwendung der Begriffe "ein Telegramm mit der ersten Adressierungstechnik" und "ein Telegramm mit der zweiten Adressierungstechnik" jeweils eine Mehrzahl an Telegrammen mit der ersten Adressierungstechnik und eine Mehrzahl an Telegrammen mit der zweiten Adressierungstechnik vollumfänglich mit umfasst.

Figur 1 zeigt einen schematischen Aufbau eines Automatisierungsnetzwerks 100 mit Automatisierungsnetzwerkteilnehmern 300, das für ein Verfahren zur Datenübertragung ausgelegt ist. Das Automatisierungsnetzwerk 100 umfasst Automatisierungsnetzwerkteilnehmer 300, die über ein Datenleitungsnetz 200 miteinander verbunden sind. Wenigstens ein Automatisierungsnetzwerkteilnehmer 300 des Automatisierungsnetzwerks 100 ist als ein Masterteilnehmer 105 ausgebildet. Der Masterteilnehmer 105 ist über eine erste Datenleitung 205 mit einem ersten Ein-/Ausgangs-Port P0 eines Netzwerkverteilers 120 verbunden. Der Netzwerkverteiler 120 kann über einen dritten Ein-/Ausgangs-Port P2 über eine dritte Datenleitung 215 mit einem ersten weiteren Netzwerkteilnehmer 110 verbunden sein. Der erste weitere Netzwerkteilnehmer 110 kann als Slaveteilnehmer ausgebildet sein.

Über einen zweiten Ein-/Ausgangs-Port P1 des Netzwerkverteilers 120 und eine zweite Datenleitung 210 kann der Netzwerkverteiler 120 mit einem Netzwerkteilnehmer 115, sowie einem zweiten weiteren Netzwerkteilnehmer 125 verbunden sein. Beispielsweise können der Netzwerkteilnehmer 115 und der zweite weitere Netzwerkteilnehmer 125 jeweils als Slaveteilnehmer ausgebildet sein. Die Darstellungen der Automatisierungsnetzwerkteilnehmer 300 sowie der Ein-/Ausgangs-Ports des Netzwerkverteilers 130 sind beispielhaft gewählt worden und schränken die Erfindung nicht auf diese ein. Auch wurden zur Vereinfachung keine Ein-/Ausgangs-Ports der einzelnen Automatisierungsnetzwerkteilnehmer 300 eingezeichnet, gleichwohl diese Ein-/Ausgangs-Ports zum Empfang und zum Weiterleiten von Telegrammen aufweisen. Auch könnte der Netzwerkverteiler 120 weitere Ein-/Ausgangs-Ports aufweisen, die in Figur 1 nicht gezeigt sind, an denen weitere Automatisierungsnetzwerkteilnehmer 300 über weitere Datenleitungen angeschlossen sein können. Ferner können an die gezeigten Datenleitungen weitere Automatisierungsnetzwerkteilnehmer 300 angeschlossen sein, als in Figur 1 gezeigt sind.

In dem in Figur 1 dargestellten Automatisierungsnetzwerk 100 kann insbesondere der Netzwerkteilnehmer 115 zur Verarbeitung von Telegrammen mit einer ersten Adressierungstechnik 500 und Telegrammen mit einer zweiten Adressierungstechnik 510 ausgebildet sein. Im Gegensatz dazu können die übrigen Automatisierungsnetzwerkteilnehmer 300 in Figur 1 zum Beispiel nur zur Verarbeitung von Telegrammen mit der ersten Adressierungstechnik 500 ausgelegt sein, wobei die Telegramme mit der ersten Adressierungstechnik 500 beispielsweise als Durchlauftelegramme ausgebildet sind, und zur Verarbeitung durch die Automatisierungsnetzwerkteilnehmer 300 in Figur 1 vorgesehen sind. Dabei kann auch der Netzwerkverteiler 120 zur Verarbeitung der Durchlauftelegramme vorgesehen sein. Insbesondere können die Telegramme mit der ersten Adressierungstechnik 500 als EtherCAT Telegramme von den Automatisierungsnetzwerkteilnehmern 300 im Durchlauf verarbeitet werden. Überdies können die Telegramme mit der zweiten Adressierungstechnik 510 zum Beispiel als Einzeltelegramme ausgebildet sein und zur Verarbeitung durch einen Automatisierungsnetzwerkteilnehmer 300, für den das Einzeltelegramm bestimmt ist, vorgesehen sein. Hierbei ist denkbar, dass das Einzeltelegramm als Ethernet Telegramm verwirklicht ist und von den Automatisierungsnetzwerkteilnehmern 300, mit Ausnahme des Netzwerkteilnehmers 115, der zusätzlich über ein Einzeltelegramm adressierbar ist, nicht verarbeitet wird. Dabei bezieht sich die Verarbeitung eines Durchlauftelegramms auf das Auslesen der an den Netzwerkteilnehmer adressierten Ausgangsdaten des Durchlauftelegramms, sowie das Einfügen von Eingangsdaten in das Durchlauftelegramm und Weiterleiten an den nachfolgenden Automatisierungsnetzwerkteilnehmer 300. Die Verarbeitung eines Einzeltelegramms wird anhand von Figur 2 noch detaillierter erläutert.

Der erste weitere Netzwerkteilnehmer 110 und der zweite weitere Netzwerkteilnehmer 125 können jeweils über einen weiteren Ein-/Ausgangs-Port, an dem kein nachfolgender Automatisierungsnetzwerkteilnehmer 300 angeschlossen und der in Figur 1 nicht gezeigt ist, mit einem Schalter kurzgeschlossenen worden sein, sodass dass sie jeweils den letzten Automatisierungsnetzwerkteilnehmer 300 in der Kette bilden. Daraufhin senden sie jeweils ein vom Masterteilnehmer 105 erhaltenes Durchlauftelegramm aufgrund des mit dem Schalter kurzgeschlossenen weiteren Ein-/Ausgangs-Ports an den Masterteilnehmer 105 zurück. Die Hinleitung sowie die Rückleitung, die das Datenleitungsnetz 200 umfasst, sind in Figur 1 nicht gezeigt. Der Masterteilnehmer 105 kann dazu ausgelegt sein, sowohl die Telegramme mit der ersten Adressierungstechnik 500 als auch die Telegramme mit der zweiten Adressierungstechnik 510 an die Automatisierungsnetzwerkteilnehmer 300 in dem in Figur 1 gezeigten Automatisierungsnetzwerk 100 auszugeben. Darüber hinaus kann der Masterteilnehmer 105 auch dazu ausgelegt sein, nur Telegramme mit der ersten Adressierungstechnik 500 oder nur Telegramme mit der zweiten Adressierungstechnik 510 im Automatisierungsnetzwerk 100 auszugeben und ein weiterer, in Figur 1 nicht dargestellter Masterteilnehmer kann dazu ausgelegt sein, nur Telegramme mit der zweiten Adressierungstechnik 510 oder nur Telegramme mit der ersten Adressierungstechnik 500 auszugeben.

Ein EtherCAT Netzwerk umfasst in der Regel ein Datenleitungsnetz 200 mit Datenleitungen, die jeweils eine Hinleitung zum Versenden der Telegramme von dem Masterteilnehmer 105 an die Automatisierungsnetzwerkteilnehmer 300 und eine Rückleitung, zum Empfang der Telegramme von dem Masterteilnehmer 105, aufweisen. Dies ist aus Übersichtlichkeitsgründen in Figur 1 nicht gezeigt. Ein Automatisierungsnetzwerkteilnehmer 300 in einem EtherCAT Netzwerk ist dazu ausgelegt, ein Durchlauftelegramm auf der Hinleitung zu verarbeiten, also die an den Automatisierungsnetzwerkteilnehmer 300 adressierten Ausgangsdaten des Telegramms zu lesen und die Eingangsdaten des Netzwerkteilnehmers in das Durchlauftelegramm zu legen. Das Zurücksenden der Durchlauftelegramme erfolgt in dem EtherCAT Netzwerk über die Rückleitung, wobei die Automatisierungsnetzwerkteilnehmer 300 die Durchlauftelegramme über die Rückleitung nicht verarbeiten. Insbesondere kann der letzte Automatisierungsnetzwerkteilnehmer 300 in der Kette gemäß der obigen Erläuterung das vom Masterteilnehmer 105 auf der Hinleitung empfangene Durchlauftelegramm über den weiteren Ein-/Ausgangs-Port, der mit dem Schalter mit der Rückleitung kurzgeschlossenen ist, über die Rückleitung an den Masterteilnehmer 105 versenden. Alternativ ist jedoch auch eine Verarbeitung der Durchlauftelegramme durch die Automatisierungsnetzwerkteilnehmer 300 auf der Rückleitung denkbar.

Der erste Ein-/Ausgangs-Port P0 des Netzwerkverteilers 120, über den der Netzwerkverteiler 120 ein Telegramm von dem Masterteilnehmer 105 empfangen hat, kann vom Netzwerkverteiler 120 in einer Speichereinheit bzw. in einer Routingtabelle des Netzwerkverteilers 120 hinterlegt werden, um beim Zurücksenden der Telegramme von dem Netzwerkverteiler 120 den dem Masterteilnehmer 105 zugeordneten ersten Ein-/Ausgangs-Port P0 des Netzwerkverteilers 120 als den Ausgangs-Port zu nutzen.

Figur 2 zeigt einen schematischen Aufbau des Netzwerkteilnehmers 115 in dem Automatisierungsnetzwerk 100 in Figur 1, der ausgelegt ist, Telegramme mit der ersten Adressierungstechnik 500 und Telegramme mit der zweiten Adressierungstechnik 510 zu verarbeiten. Das in Figur 1 dargestellte Automatisierungsnetzwerk 100 kann überdies weitere Automatisierungsnetzwerkteilnehmer 300 aufweisen, die ebenfalls ausgelegt sind, Telegramme mit der ersten Adressierungstechnik 500 und Telegramme mit der zweiten Adressierungstechnik 510 zu verarbeiten. Dieses Merkmal ist insbesondere nicht auf den Netzwerkteilnehmer 115 in dem Automatisierungsnetzwerk 100 beschränkt.

Der Netzwerkteilnehmer 115 umfasst wenigstens einen Empfangs-Port 400 und wenigstens einen Sende-Port 405, an die weitere Automatisierungsnetzwerkteilnehmer 300 über das Datenleitungsnetz 200 angeschlossen sein können. In Figur 1 ist der Netzwerkteilnehmer 115 über die zweite Datenleitung 210 mit weiteren Automatisierungsnetzwerkteilnehmern 300 verbunden. Der Netzwerkteilnehmer 115 ist ausgelegt, Telegramme mit der ersten Adressierungstechnik 500 und Telegramme mit der zweiten Adressierungstechnik 510, die von dem Masterteilnehmer 105 ausgegeben werden, über den Empfangs-Port 400 zu empfangen und über den Sende-Port 405 zu versenden. Dabei stehen die Symbole "RX" und "TX" am Empfangs-Port 400 und am Sende-Port 405 jeweils für Empfang bzw. den Empfänger (RX: Receive bzw. Receiver) und für Senden bzw. den Sender (TX: Transmit bzw. Transmitter). Die Symbole dienen der Vereinfachung der Darstellung, um insbesondere den Empfang und das Versenden der Telegramme mit der ersten Adressierungstechnik 500 und Telegramme mit der zweiten Adressierungstechnik 510 über den Empfangs-Port 400 und über den Sende-Port 405 durch den Netzwerkteilnehmer 115 zu kennzeichnen.

Die Telegramme mit der ersten Adressierungstechnik 500 sind als Durchlauftelegramme ausgebildet und können von allen Automatisierungsnetzwerkteilnehmern 300 mithilfe einer ersten Verarbeitungseinheit 430 verarbeitet werden. Im Regelfall können alle Automatisierungsnetzwerkteilnehmer 300 jeweils mit Durchlauftelegrammen angesprochen beziehungsweise adressiert werden. Die Telegramme mit der zweiten Adressierungstechnik 510 sind als Einzeltelegramme ausgebildet und können von dem Automatisierungsnetzwerkteilnehmer 300 in dem Automatisierungsnetzwerk 100 verarbeitet werden, für den sie jeweils bestimmt sind. Im Gegensatz zu Durchlauftelegrammen, bei denen die Automatisierungsnetzwerkteilnehmer 300 die Telegramme on the fly verarbeiten und nur mit einer Durchlaufverzögerungszeit, die sich aus einer Hardware-Durchlaufzeit, also der Durchlaufzeit durch den einzelnen Netzwerkteilnehmer ergibt, verzögert werden, ist es bei einem Einzeltelegramm erforderlich, dass die Telegramme jeweils so lange verzögert werden, bis eine Zieladresse des Telegramms von den Automatisierungsnetzwerkteilnehmern 300 empfangen worden ist. Dazu werden die Einzeltelegramme in einer ersten Speichereinheit 420 zwischen gespeichert, bis der Netzwerkteilnehmer 115 jeweils die Zieladresse der Einzeltelegramme empfangen hat.

Anhand der empfangenen Zieladresse, die als MAC-Adresse (MAC: Media Access Control) in einem Kopfabschnitt der Einzeltelegramme ausgebildet sein kann, kann der Netzwerkteilnehmer 115 prüfen, ob das Telegramm für den Netzwerkteilnehmer 115 bestimmt ist. Stimmt die Zieladresse eines Einzeltelegramms mit einer Hardware-Adresse des Netzwerkteilnehmers 115 überein, wobei die Hardware-Adresse zum Beispiel ebenfalls als MAC-Adresse ausgebildet ist, so kann der Netzwerkteilnehmer 115 das Einzeltelegramm mithilfe einer zweiten Verarbeitungseinheit 440 verarbeiten. Das Einzeltelegramm wird dann nicht an einen nachfolgenden Automatisierungsnetzwerkteilnehmer 300 weitergeleitet. Stimmt die Zieladresse eines Einzeltelegramms hingegen nicht mit der jeweiligen Hardware-Adresse des Netzwerkteilnehmers 115 überein, so leitet der Netzwerkteilnehmer 115 das Einzeltelegramm an den nachfolgenden Automatisierungsnetzwerkteilnehmer 300 über den Sende-Port 405 weiter.

Wenn beispielsweise zehn Automatisierungsnetzwerkteilnehmer 300 in einer Linie vernetzt wären, die gleichermaßen wie der Netzwerkteilnehmer 115 ausgebildet sind, und bei denen ein Einzeltelegramm erst für den zehnten Automatisierungsnetzwerkteilnehmer 300 in der Kette bestimmt ist, so müsste das Einzeltelegramm von den neun vorangehenden Automatisierungsnetzwerkteilnehmern 300 jeweils verzögert, also so lange zwischengespeichert werden, bis die neun Automatisierungsnetzwerkteilnehmer 300 jeweils die Zieladresse des Einzeltelegramms empfangen haben, anhand derer sie entscheiden können, ob das Einzeltelegramm für sie bestimmt ist oder nicht. Wird dagegen ein Durchlauftelegramm von dem Masterteilnehmer 105 an die zehn Automatisierungsnetzwerkteilnehmer 300 über das Datenleitungsnetz 200 ausgegeben, würde keine zusätzliche Verzögerung, mit Ausnahme der obigen Durchlaufverzögerungszeit, die sich aus der Durchlaufzeit durch den einzelnen Automatisierungsnetzwerkteilnehmer 300 ergibt, auftreten, da die zehn Automatisierungsnetzwerkteilnehmer 300 das Durchlauftelegramm on the fly jeweils mithilfe der ersten Verarbeitungseinheit 430 verarbeiten. Die erste Verarbeitungseinheit 430 und die zweite Verarbeitungseinheit 440 des Netzwerkteilnehmers 115 können in Form von Hardware oder in Form von Software oder in Form von Hard- und Software verwirklicht sein.

Figur 2 zeigt die Situation des Empfangs (RX) von Telegrammen mit der ersten Adressierungstechnik 500 und von Telegrammen mit der zweiten Adressierungstechnik 510 über den Empfangs-Port 400. Alternativ ist auch ein Empfang der Telegramme über den Sende-Port 405 denkbar. Neben dem gezeigten Empfangs-Port 400 und Sende-Port 405 kann der Netzwerkteilnehmer 115 weitere Empfangs- und/oder Sende-Ports umfassen. Über den Empfangs-Port 400 empfangene Telegramme mit der ersten Adressierungstechnik 500 und über den Empfangs-Port 400 empfangene Telegramme mit der zweiten Adressierungstechnik 510 gelangen auf eine Empfangslogik 410. Diese kann als Hardware oder als Software oder als kombiniertes Hardware- und Software-Element ausgebildet sein. Die oben genannten weiteren Empfangs- und/oder Sende-Ports können jeweils eine Empfangslogik 410 umfassen. Die Empfangslogik 410 kann als sogenannte "Telegramm-Weiche" ausgelegt sein, das heißt sie kann für die Telegramme mit der ersten Adressierungstechnik 500 und für die Telegramme mit der zweiten Adressierungstechnik 510 als Weiche fungieren und die genannten Telegramme gezielt an die jeweilige Verarbeitungseinheit weiterleiten. Die Empfangslogik 410 kann also ausgelegt sein, Telegramme mit der ersten Adressierungstechnik 500 an die erste Verarbeitungseinheit 430 zur Verarbeitung weiterzuleiten, wobei die erste Verarbeitungseinheit einen ersten Prozessorchip 435 zur Verarbeitung der Telegramme mit der ersten Adressierungstechnik 500 umfassen kann. Insbesondere kann der erste Prozessorchip 435 in einem Automatisierungsnetzwerk 100, das als EtherCAT Netzwerk ausgebildet ist, als EtherCAT Slave Controller zur Verarbeitung von EtherCAT Durchlauftelegrammen ausgebildet sein.

Nach der Verarbeitung der Telegramme mit der ersten Adressierungstechnik 500 im Durchlauf durch den ersten Prozessorchip 435, leitet die erste Verarbeitungseinheit 430 die Telegramme mit der ersten Adressierungstechnik 500 an eine Sendelogik 415 weiter. Die Sendelogik 415 kann gleichermaßen wie die Empfangslogik 410 als "Telegramm-Weiche" ausgebildet sein. Dies ist insbesondere denkbar, wenn die Empfangslogik 410 ausgelegt ist die Telegramme mit der ersten Adressierungstechnik 500 und die Telegramme mit der zweiten Adressierungstechnik 510 zu verdoppeln und jeweils ein Telegramm an die erste Verarbeitungseinheit 430 und die zweite Verarbeitungseinheit 440 weiterzuleiten. In dem Fall kann die Sendelogik vorzugsweise als Telegramm-Weiche fungieren, um eine Selektion der Telegramme vorzunehmen und um diese gezielt über den Sende-Port 405 auszugeben.

Ferner ist die Empfangslogik 410 in der in Figur 2 dargestellten Situation ausgelegt, Telegramme mit der zweiten Adressierungstechnik 510 in einer ersten Speichereinheit 420 zwischen zu speichern, bis die Zieladressen der Telegramme jeweils empfangen worden sind. Die erste Speichereinheit 420 kann dabei als ein sogenannter "FIFO-Speicher" ausgebildet sein. Ein FIFO-Speicher (FIFO: First In First Out) ist ein Pufferspeicher nach einem "Warteschlangenprinzip", der ausgelegt ist, Daten aufzufangen, die nicht sofort verarbeitet werden können. Ein FIFO funktioniert definitionsgemäß so, dass das erste Element (First In), welches "hinten" in die Warteschlange eingefügt wird, später auch als erstes "vorne" herausgeholt wird (First Out). Die Telegramme mit der zweiten Adressierungstechnik 510 werden anschließend an die zweite Verarbeitungseinheit 440 weitergeleitet, da die zweite Verarbeitungseinheit 440 die Zieladresse der Telegramme mit der zweiten Adressierungstechnik 510 auswertet.

Die zweite Verarbeitungseinheit 440 umfasst in Figur 2 einen zweiten Prozessorchip 445 sowie einen dritten Prozessorchip 450. Der zweite Prozessorchip 445 ist zum Beispiel als Ethernet Controller beziehungsweise als sogenannter "MAC" ausgebildet und der dritte Prozessorchip 450 ist beispielsweise als Mikrocontroller (µC) beziehungsweise als Mikroprozessor (µP) ausgebildet. In Figur 2 bilden der zweite Prozessorchip 445 und der dritte Prozessorchip 450 separate Komponenten. Diese können jedoch auch in Form einer gemeinsamen Komponente ausgebildet sein. Auch ist denkbar, die erste Verarbeitungseinheit 430 und die zweite Verarbeitungseinheit 440, umfassend den ersten bis dritten Prozessorchip 430, 445, 450 in einem gemeinsamen Bauteil zu verwirklichen, vorzugsweise in einem ASIC (ASIC: Application Specific Integrated Circuit), also in einer elektronischen Schaltung, die als integrierter Schaltkreis realisiert wird. Auch ist denkbar, dass der zweite Prozessorchip 445 der zweiten Verarbeitungseinheit 440 zur Verarbeitung der Telegramme mit der zweiten Adressierungstechnik 510 ausgelegt ist, sofern der zweite Prozessorchip 445 um die Funktionalität des Verarbeitens erweitert wird.

In diesem Zusammenhang ist überdies denkbar, dass die erste Verarbeitungseinheit 430, das heißt der erste Prozessorchip 435, insbesondere bei der Ausbildung als EtherCAT Slave Controller ausgelegt sein kann, Telegramme mit der ersten Adressierungstechnik 500, die für die Verarbeitung durch die Automatisierungsnetzwerkteilnehmer 300 gesperrt sind, und dies über einen ersten Wert eines EtherCAT Protokolltyps anzeigen, freizugeben, indem der erste Prozessorchip 435 den ersten Wert des EtherCAT Protokolltyps mit einem zweiten Wert überschreibt, der den Automatisierungsnetzwerkteilnehmern 300 standardmäßig die Freigabe der Verarbeitung der Telegramme mit der ersten Adressierungstechnik 500 anzeigt. Umgekehrt kann der erste Prozessorchip 435 auch dazu ausgelegt sein, ein entsperrtes Telegramm zu sperren, in dem der erste Prozessorchip 435 den zweiten Wert des EtherCAT Protokolltyps auf den ersten Wert setzt. Es ist denkbar, dass die erläuterten Funktionen der Freigabe beziehungsweise der Sperrung der Telegramme mit der ersten Adressierungstechnik 500 in dem ersten Prozessorchip 435 zunächst deaktiviert ist und bei Bedarf aktiviert werden kann, zum Beispiel von dem Masterteilnehmer 105 im Zuge der Konfiguration des Automatisierungsnetzwerks 100 und der Automatisierungsnetzwerkteilnehmer 300.

Der zweite Prozessorchip 445 der zweiten Verarbeitungseinheit 445 übernimmt die Auswertung der Zieladresse der Telegramme mit der zweiten Adressierungstechnik 510. Dazu vergleicht der zweite Prozessorchip 445 jeweils die Zieladresse der Telegramme mit der zweiten Adressierungstechnik 510 mit der Hardware-Adresse des zweiten Prozessorchips 445 bzw. generell mit der Hardware-Adresse der zweiten Verarbeitungseinheit 440. Stimmt die Zieladresse der Telegramme mit der zweiten Adressierungstechnik 510 jeweils mit der Hardware-Adresse überein, so leitet der zweite Prozessorchip 445 die Telegramme mit der zweiten Adressierungstechnik 510 zur Verarbeitung an den dritten Prozessorchip 450 weiter. Stimmt die Zieladresse der Telegramme mit der zweiten Adressierungstechnik 510 hingegen nicht mit der Hardware-Adresse des zweiten Prozessorchips 445 überein, so leitet der zweite Prozessorchip 445 die Telegramme mit der zweiten Adressierungstechnik 510 an die Sendelogik 415 zum Senden (TX) über den Sende-Port 405 an einen nachfolgenden Automatisierungsnetzwerkteilnehmer 300 weiter. Fungiert die Empfangslogik 410 bereits als Telegramm-Weiche, wie in dem erläuterten Beispiel, so ist es nicht erforderlich, dass die Sendelogik 415 zusätzlich als Telegramm-Weiche zur Selektion der Telegramme fungiert.

Darüber hinaus kann die zweite Verarbeitungseinheit 440 ausgelegt sein, das heißt der dritte Prozessorchip 450 der zweiten Verarbeitungseinheit 440 kann ausgelegt sein, eigenständig ein Telegramm mit der zweiten Adressierungstechnik 520 zu erzeugen und dieses an den zweiten Prozessorchip 445 weiterzuleiten. Sofern der Sende-Port 405 nicht belegt ist, also gerade kein Telegramm mit der ersten Adressierungstechnik 500 oder kein Telegramm mit der zweiten Adressierungstechnik 510 über den Sende-Port 405 ausgegeben wird, so erhält der zweite Prozessorchip 445 ein Sendesignal 455, das dem zweiten Prozessorchip 445 anzeigt, dass er das erzeugte Telegramm mit der zweiten Adressierungstechnik 520 an die Sendelogik 415 zur Ausgabe über den Sende-Port 405 weiterleiten kann. Empfängt der zweite Netzwerkteilnehmer 115 vor der Ausgabe des erzeugten Telegramms mit der zweiten Adressierungstechnik 520 beispielsweise Telegramme mit der ersten Adressierungstechnik 500 über den Empfangs-Port 400, die von der Empfangslogik 410 an die erste Verarbeitungseinheit 430 zur Verarbeitung weitergeleitet werden und von der ersten Verarbeitungseinheit 430 an die Sendelogik 415 weitergeleitet werden, so kann die Sendelogik 415 beziehungsweise der Netzwerkteilnehmer 115 ausgelegt sein, die Telegramme mit der ersten Adressierungstechnik 500 in einer zweiten Speichereinheit 425 zwischen zu speichern. Zum Beispiel kann erst der Sendevorgang des erzeugten Telegramms mit der zweiten Adressierungstechnik 520 abgeschlossen werden.

Alternativ kann der Netzwerkteilnehmer 115 auch Telegramme mit der zweiten Adressierungstechnik 510 über den Empfangs-Port 400 empfangen und diese in der zweiten Speichereinheit 425 zwischen speichern, falls deren Zieladresse jeweils nicht mit der Hardware-Adresse des zweiten Prozessorchips 445 bzw. generell mit der Hardware-Adresse der zweiten Verarbeitungseinheit 440 übereinstimmen. Falls den Telegrammen jeweils ein Prioritätswert zugeordnet ist, also den über den Empfangs-Port 400 empfangenen Telegrammen mit der ersten Adressierungstechnik 500 und den Telegrammen mit der zweiten Adressierungstechnik 510 jeweils ein erster Prioritätswert zugeordnet ist und dem erzeugten Telegramm mit der zweiten Adressierungstechnik 520, das über den Sende-Port 405 ausgegeben wird, ein zweiter Prioritätswert zugeordnet ist, wobei der erste Prioritätswert wertmäßig höher als der zweite Prioritätswert ausgebildet ist, kann die Sendelogik 415 beziehungsweise der Netzwerkteilnehmer 115 auch dazu ausgelegt sein, den Sendevorgang des erzeugten Telegramms mit der zweiten Adressierungstechnik 520 zu unterbrechen und den noch nicht gesendeten Teil des Telegramms in der zweiten Speichereinheit 425 zwischen zu speichern. Die Sendelogik 415 beziehungsweise der Netzwerkteilnehmer 115 kann also dazu ausgelegt sein, das erzeugte Telegramm mit der zweiten Adressierungstechnik 520 zu fragmentieren und dieses in Fragmenten zu übertragen, wobei beispielsweise die über den Empfangs-Port 400 empfangenen Telegramme mit der ersten Adressierungstechnik 500 und die Telegramme mit der zweiten Adressierungstechnik 510 vorrangig über den Sende-Port 405 von der Sendelogik 415 zum Senden (TX) ausgegeben werden können. Alternativ kann das Senden (TX) der Telegramme auch über den Empfangs-Port 400 erfolgen und der Empfang (RX) über den Sende-Port 405. Daher weisen sowohl der Empfangs-Port 400 als auch der Sende-Port 405 in Figur 2 die Symbole zur Kennzeichnung des Empfangs (RX) und des Sendens (TX) auf, da das Datenleitungsnetz 200 bidirektionale Datenleitungen aufweisen kann, über die gleichzeitig gesendet und empfangen werden kann.

Aus Übersichtlichkeitsgründen sind die internen Verbindungen der einzelnen Komponenten des zweiten Netzwerkteilnehmers 115 nicht zusätzlich in Figur 2 gezeigt. Die nachfolgenden Erläuterungen zu den internen Verbindungen beziehen sich auf die erste Filterauslegung 600, bei der die Empfangslogik 410 zur Selektion der Telegramme mit der ersten Adressierungstechnik 500 und der Telegramme mit der zweiten Adressierungstechnik 510 ausgelegt ist. Die internen Verbindungen der Komponenten des Netzwerkteilnehmers 115 sind jedoch nicht auf diese Erläuterung eingeschränkt. Der Netzwerkteilnehmer 115 weist eine Verbindung des Empfangs-Ports 400 mit der Empfangslogik 410 auf. Die Empfangslogik 410 ist mit der ersten Speichereinheit 420 verbunden und die zweite Verarbeitungseinheit 440 kann aufgrund einer Verbindung zwischen der ersten Speichereinheit 420 und der zweiten Verarbeitungseinheit 440 auf die erste Speichereinheit 420 zugreifen, um die Auswertung der Zieladresse eines Telegramms mit der zweiten Adressierungstechnik 510 vornehmen zu können. Auch der zweite Prozessorchip 445 und der dritte Prozessorchip 450 der zweiten Verarbeitungseinheit 440 weisen interne Verbindungen auf, damit der zweite Prozessorchip 445 bei Übereinstimmung der Zieladresse des Telegramms mit der zweiten Adressierungstechnik 510 mit der Hardware-Adresse des zweiten Prozessorchips 445 bzw. generell mit der Hardware-Adresse der zweiten Verarbeitungseinheit 440, das Telegramm mit der zweiten Adressierungstechnik 510 an den dritten Prozessorchip 450 zur Verarbeitung übergeben kann.

Überdies weist die zweite Verarbeitungseinheit 440 eine Verbindung zu einem zweiten Eingangs-Port der Sendelogik 415 auf, um ein Telegramm mit der zweiten Adressierungstechnik an die Sendelogik 415 weiterleiten zu können. Die Sendelogik 415 kann ferner mit einer zweiten Speichereinheit 425 des zweiten Netzwerkteilnehmers 115 verbunden sein, damit die Sendelogik 415 zum Beispiel beim Sendevorgang eines erzeugten Telegramms mit der zweiten Adressierungstechnik 520 von der zweiten Verarbeitungseinheit 440 ein gleichzeitig über den Empfangs-Port 400 empfangenes Telegramm mit der ersten oder zweiten Adressierungstechnik zwischenspeichern kann. Sowohl die zweite Speichereinheit 425 als auch die Sendelogik 415 können jeweils eine Verbindung zum Sende-Port 405 des zweiten Netzwerkteilnehmers 115 aufweisen.

Des Weiteren kann die Empfangslogik 410 eine Verbindung zum ersten Prozessorchip 435 der ersten Verarbeitungseinheit 430 umfassen, um die Telegramme mit der ersten Adressierungstechnik 500 an die erste Verarbeitungseinheit 430 und den ersten Prozessorchip 435 zur Verarbeitung weiterzuleiten. Die erste Verarbeitungseinheit 430 mit dem ersten Prozessorchip 435 weist ferner eine Verbindung zu einem ersten Eingangs-Port der Sendelogik 415 auf, um ein Telegramm mit der ersten Adressierungstechnik 500 nach der Verarbeitung durch die erste Verarbeitungseinheit 430 bzw. den ersten Prozessorchip 435 weiterleiten zu können. Die Verbindungen der Sendelogik 415 sind die gleichen, wie oben erläutert, um ein Telegramm mit der ersten Adressierungstechnik 500 in der zweiten Speichereinheit 425 zwischen zu speichern oder direkt über den Sende-Port 405 des zweiten Netzwerkteilnehmers 115 auszugeben.

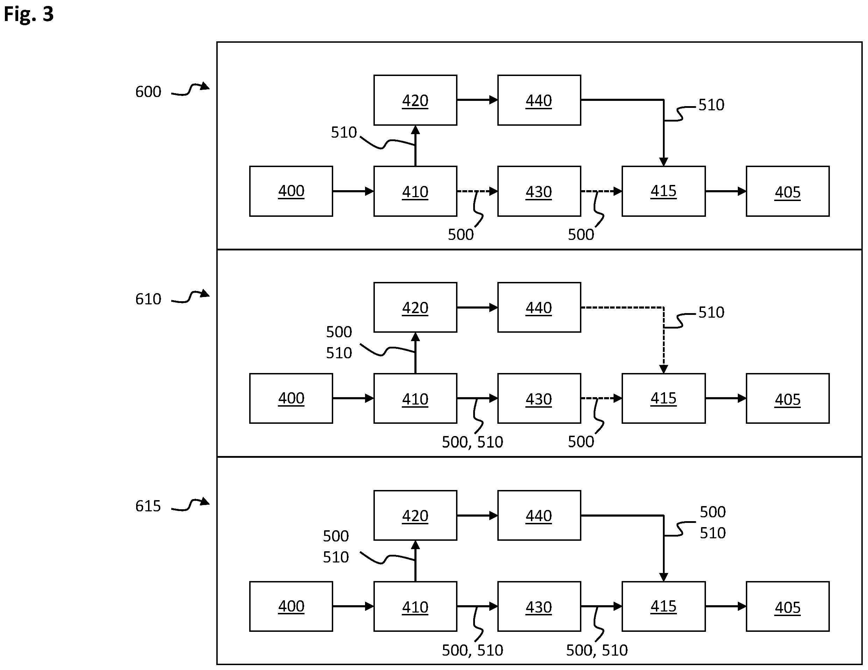

Figur 3 zeigt eine schematische Darstellung einer ersten bis dritten Filterauslegung 600, 610, 615, also wie die Telegramme mit der ersten Adressierungstechnik 500 und die Telegramme mit der zweiten Adressierungstechnik 510 anhand der verschiedenen Komponenten des in Figur 2 dargestellten Netzwerkteilnehmers 115 selektiert beziehungsweise gefiltert werden können. Zur Darstellung der einzelnen Filterauslegungen in Figur 3, bei denen die Einstellungen zum Beispiel jeweils vom Masterteilnehmer 105 vorgenommen werden können, ist angenommen worden, dass die zweite Verarbeitungseinheit 440 kein Telegramm mit der zweiten Adressierungstechnik 520 erzeugt. Demnach ist auch keine zweite Speichereinheit 425 in Figur 3 gezeigt. Jedoch dient dies nur zur Vereinfachung der Beschreibung der einzelnen Filterauslegungen und ist nicht als einschränkend auf die Filterauslegungen zu interpretieren. Gleichwohl kann die zweite Verarbeitungseinheit 440 auch in Bezug auf die einzelnen Filterauslegungen ausgelegt sein, ein Telegramm mit der zweiten Adressierungstechnik 520 zu erzeugen.

Die erste Filterauslegung 600 bezieht sich auf die obere Bildhälfte der Figur 3. In der ersten Filterauslegung 600 ist die Empfangslogik 410 ausgelegt über den Empfangs-Port 400 empfangene Telegramme mit der ersten und zweiten Adressierungstechnik 500, 510 gezielt zu selektieren und nach der Selektion an die entsprechende Verarbeitungseinheit weiterzuleiten. Dabei kann die Selektion der Telegramme mit der ersten und der zweiten Adressierungstechnik 500, 510 auf der Grundlage einer Ausbildung der Telegramme basieren, bei der jeweils ein Kopfabschnitt der Telegramme mit der ersten Adressierungstechnik 500 verschieden von einem Kopfabschnitt der Telegramme mit der zweiten Adressierungstechnik 510 ausgebildet ist. Denkbar ist hierbei, dass die Präambel der Telegramme verschiedenartig ausgebildet ist, da die Präambel in einem Ethernet Datenframe nach dem IEEE 802.3 Standard, den Startabschnitt im Kopfabschnitt eines Telegramms bildet und damit die Basis für eine frühestmögliche Weiterleitungsentscheidung sein kann. Beispielsweise kann die Bitfolge der Präambel der Telegramme mit der ersten Adressierungstechnik im Kopfabschnitt anders als die Bitfolge der Präambel der Telegramme mit der zweiten Adressierungstechnik im Kopfabschnitt ausgebildet sein.

Neben der verschiedenartigen Ausgestaltung der Präambel kann auch generell jedes andere Datenfeld nach dem IEEE 802.3 Ethernet Datenframe Aufbau für die Telegramme mit der ersten und zweiten Adressierungstechnik verschieden voneinander ausgestaltet sein, sodass eine Unterscheidung der Telegramme anhand deren Kopfabschnitte möglich ist. Dabei liegt der vorstehenden Erläuterung zu Grunde, dass sowohl die Telegramme mit der ersten Adressierungstechnik 500 als auch die Telegramme mit der zweiten Adressierungstechnik 510 jeweils nach dem bekannten IEEE 802.3 Format aufgebaut sind, bzw. falls diese ein Tag umfassen, dem Standard IEEE 802.1Q entsprechen. In der ersten Filterauslegung 600 kann die Empfangslogik 410 also vom Masterteilnehmer 105 eingestellt werden, sodass sie ein über den Empfangs-Port 400 empfangenes Telegramm mit der ersten Adressierungstechnik 500 oder mit der zweiten Adressierungstechnik 510 anhand dessen Kopfabschnitt unterscheiden kann.

Erkennt die Empfangslogik 410 die Telegramme mit der ersten Adressierungstechnik 500 anhand ihrer Kopfabschnitte, so leitet die Empfangslogik 410 diese gezielt an die erste Verarbeitungseinheit 430 zur Verarbeitung durch den ersten Prozessorchip 435 weiter. Die erste Verarbeitungseinheit 430 leitet die Telegramme mit der ersten Adressierungstechnik 500 jeweils nach der Verarbeitung durch die erste Verarbeitungseinheit 430 an die Sendelogik 415 weiter, wobei die Sendelogik 415 in der ersten Filterauslegung 600 zum Beispiel nicht als Telegramm-Weiche ausgelegt ist, da die Selektion der Telegramme bereits durch die Empfangslogik 410 erfolgt ist.

Kann die Empfangslogik 410 die Telegramme mit der zweiten Adressierungstechnik 510 anhand ihrer Kopfabschnitte erkennen, so leitet die Empfangslogik 410 die Telegramme mit der zweiten Adressierungstechnik 510 gezielt an die erste Speichereinheit 420 weiter, mithilfe der die Telegramme mit der zweiten Adressierungstechnik 510 so lange zwischengespeichert werden, bis jeweils die Zieladressen der Telegramme mit der zweiten Adressierungstechnik 510 empfangen worden sind. Die zweite Verarbeitungseinheit 440 prüft, ob die Zieladressen der Telegramme mit der zweiten Adressierungstechnik 510 mit der Hardware-Adresse der zweiten Verarbeitungseinheit 440 übereinstimmt und verarbeitet die Telegramme mit der zweiten Adressierungstechnik 510 im Falle der Übereinstimmung. Andernfalls leitet die zweite Verarbeitungseinheit 440 die Telegramme mit der zweiten Adressierungstechnik 510 an die Sendelogik 415 weiter, welche sie über den Sende-Port 405 an einen nachfolgenden Automatisierungsnetzwerkteilnehmer 300 ausgibt.

Alternativ zur vorstehenden Erläuterung bezüglich der Selektion der Telegramme mit der ersten Adressierungstechnik 500 und der Telegramme mit der zweiten Adressierungstechnik 510 durch die Empfangslogik 410, kann die Empfangslogik 410 die über den Empfangs-Port 400 empfangenen Telegramme mit der ersten Adressierungstechnik 500 und die Telegramme mit der zweiten Adressierungstechnik 510 auf der Grundlage eines Umschalttelegramms unterscheiden. Mit dem Umschalttelegramm kann das Weiterleiten von nachfolgend auf das Umschalttelegramm über den Empfangs-Port 400 von dem Masterteilnehmer 105 empfangenen Telegrammen mit der ersten Adressierungstechnik an die erste Verarbeitungseinheit 430 oder empfangene Telegramme mit der zweiten Adressierungstechnik 510 an zweite Verarbeitungseinheit 440 durch die Empfangslogik 410 umgeschaltet werden. Der Masterteilnehmer 105 versendet also das Umschalttelegramm an den Netzwerkteilnehmer 115, damit der Empfangslogik 410 zum Beispiel bei vorangehender Selektion von Telegrammen mit der ersten Adressierungstechnik 500 für die Weiterleitung an die erste Verarbeitungseinheit 430 angezeigt wird, dass nach dem Umschalttelegramm von dem Masterteilnehmer 105 Telegramme mit der zweiten Adressierungstechnik 510 an den Netzwerkteilnehmer 115 versendet werden. Die Empfangslogik 410 kann mit dem Umschalttelegramm gleichzeitig dahingehend eingestellt werden, dass die Empfangslogik 410 die nach dem Umschalttelegramm empfangenen Telegramme mit der zweiten Adressierungstechnik 510 an die zweite Verarbeitungseinheit 440 weiterleitet.

In einer weiteren Alternative zur obigen Beschreibung kann die Empfangslogik 410 ausgelegt sein, auf der Grundlage eines festgelegten Zeitfensters die Telegramme mit der ersten Adressierungstechnik 500 und die Telegramme mit der zweiten Adressierungstechnik 510 zu unterscheiden. In dem vom Masterteilnehmer 105 festgelegten Zeitfenster können jeweils Telegramme mit der ersten Adressierungstechnik 500 beziehungsweise Telegramme mit der zweiten Adressierungstechnik 510 über den Empfangs-Port 400 von der Empfangslogik 410 empfangen werden. Das festgelegte Zeitfenster kann beispielsweise als ein sich zyklisch wiederholendes Zeitfenster vom Masterteilnehmer 105 konfiguriert sein. Beispielsweise kann sich ein Vorgang alle 1 ms zyklisch wiederholen. Es ist denkbar, dass der Masterteilnehmer 105 das Zeitfenster auf 1 ms festlegt und dieses in ein erstes Zeitfenster mit 500 µs und ein zweites Zeitfenster mit weiteren 500 µs unterteilt. Hierbei können im ersten Zeitfenster zum Beispiel Telegramme mit der ersten Adressierungstechnik 500 vom Masterteilnehmer 105 ausgegeben werden, die die Empfangslogik 410 aufgrund der mit dem festgelegten Zeitfenster zusammenhängenden Konfiguration des Masterteilnehmers 105 zum Beispiel an die erste Verarbeitungseinheit 430 weiterleitet. Im zweiten Zeitfenster können vom Masterteilnehmer 105 oder einem weiteren Masterteilnehmer Telegramme mit der zweiten Adressierungstechnik 510 ausgegeben werden und die Empfangslogik 410 kann diese Telegramme aufgrund der Einstellung gezielt an die zweite Verarbeitungseinheit 440 zum Adressabgleich und einer möglichen Verarbeitung weiterleiten.

In der zweiten Filterauslegung 610 in der Mitte in Figur 3 ist die Empfangslogik 410 ausgelegt, von über den Empfangs-Port 400 des zweiten Netzwerkteilnehmers 115 empfangene Telegramme mit der ersten Adressierungstechnik 500 und der zweiten Adressierungstechnik 510 zu verdoppeln und jeweils ein Telegramm an die erste Verarbeitungseinheit 430 und an die zweite Verarbeitungseinheit 440 weiterzuleiten. Die Empfangslogik 410 kann in der zweiten Filterauslegung 610 beispielsweise nur zur Verdopplung der Telegramme mit der ersten Adressierungstechnik 500 und der Telegramme mit der zweiten Adressierungstechnik 510 ausgelegt sein und nicht als Telegramm-Weiche zur Selektion der Telegramme. Beispielsweise kann diese Funktionalität in der zweiten Filterauslegung 610 deaktiviert sein. Die erste Verarbeitungseinheit 430 ist ausgelegt, Telegramme mit der zweiten Adressierungstechnik 510 zu verwerfen und die zweite Verarbeitungseinheit 440 ist ausgelegt, Telegramme mit der ersten Adressierungstechnik 500 zu verwerfen. Das heißt, dass die erste und die zweite Verarbeitungseinheit 430, 440 in der zweiten Filterauslegung 610 als Telegramm-Weichen zur Selektion der Telegramme ausgebildet sind. Dabei selektiert die erste Verarbeitungseinheit 430 Telegramme mit der ersten Adressierungstechnik 500 zur Verarbeitung durch den ersten Prozessorchip 435 und verwirft Telegramme mit der zweiten Adressierungstechnik 510. Die zweite Verarbeitungseinheit 440 selektiert Telegramme mit der zweiten Adressierungstechnik 510 zur Verarbeitung, sofern jeweils die Zieladresse der Telegramme mit der zweiten Adressierungstechnik 510 mit der Hardware-Adresse der zweiten Verarbeitungseinheit 440 übereinstimmt.

Ferner ist die Sendelogik 415 ausgelegt, von der ersten Verarbeitungseinheit 430 beziehungsweise von der zweiten Verarbeitungseinheit 440 empfangene Telegramme an den Sende-Port 405 des zweiten Netzwerkteilnehmers 115 weiterzuleiten, sofern jeweils die Zieladresse der Telegramme mit der zweiten Adressierungstechnik 510 nicht mit der Hardware-Adresse der zweiten Verarbeitungseinheit 440 übereinstimmt, da die zweite Verarbeitungseinheit 440 die Telegramme mit der zweiten Adressierungstechnik 510 andernfalls verarbeitet und diese nicht an die Sendelogik 415 weiterleitet. In der zweiten Filterauslegung 610 ist die Sendelogik 415 zum Beispiel nicht analog zur Empfangslogik 410 ausgelegt, da die Sendelogik 415 zum Beispiel nicht zur Duplizierung der Telegramme mit der ersten Adressierungstechnik 500 und der Telegramme mit der zweiten Adressierungstechnik 510 ausgelegt ist. Prinzipiell können die Empfangslogik 410 und die Sendelogik 415 jedoch die gleichen Funktionalitäten umfassen. Über den Sende-Port 405 des Netzwerkteilnehmers 115 werden die Telegramme mit der ersten Adressierungstechnik 500 und die Telegramme mit der zweiten Adressierungstechnik 510 dann an einen oder mehrere nachfolgenden Automatisierungsnetzwerkteilnehmer 300 weitergeleitet.

Die Selektion der Telegramme mit der ersten Adressierungstechnik 500 und der Telegramme mit der zweiten Adressierungstechnik 510 durch die erste Verarbeitungseinheit 430 und die zweite Verarbeitungseinheit 440 kann jeweils auf der Grundlage der verschiedenartigen Ausbildung der Kopfabschnitte der Telegramme basieren, bei der jeweils der Kopfabschnitt der Telegramme mit der ersten Adressierungstechnik 500 verschieden von dem Kopfabschnitt der Telegramme mit der zweiten Adressierungstechnik 510 ausgebildet ist. Zum Beispiel kann die Präambel der Telegramme verschiedenartig ausgebildet sein und die Grundlage zur Selektion der Telegramme bilden, wie oben bereits im Zusammenhang mit der ersten Filterauslegung 600 erläutert wurde. Die oben genannten Merkmale gelten für die zweite Filterauslegung 610 analog und werden aus diesem Grund nicht mehr wiederholt. In diesem Zusammenhang ist denkbar, dass die erste Verarbeitungseinheit 430 und die zweite Verarbeitungseinheit 440 ausgelegt sind, jeweils ein Steuersignal an die Sendelogik 415 weiterzuleiten, damit die Sendelogik 415 das von der jeweiligen Verarbeitungseinheit empfangene Telegramm mit der ersten Adressierungstechnik 500 oder das empfangene Telegramm mit der zweiten Adressierungstechnik 510 an den Sende-Port 405 weiterleitet.

Die erste Verarbeitungseinheit 430 kann zum Beispiel dahingehend eingestellt sein, die Telegramme mit der zweiten Adressierungstechnik 510 jeweils aufgrund eines Datenfelds, das als Typfeld (Ethertype) ausgebildet ist, das die Telegramme jeweils im Kopfabschnitt aufweisen, und von dem Typfeld im Kopfabschnitt der Telegramme mit der ersten Adressierungstechnik 500 abweicht, nicht zu verarbeiten. Das Typfeld umfasst jeweils einen Wert, der ein verwendetes Protokoll einer nächsthöheren Schicht innerhalb von Nutzdaten angibt, wobei eine Schicht und eine nächsthöhere Schicht nach dem OSI-Modell (OSI: O-pen Systems Interconnection), also dem Referenzmodell für Datenübertragungsprotokolle in einer Schichtenarchitektur, definiert sind. Beispielsweise weist das Typfeld den Wert 0x88A4 (im Hexadezimalsystem) auf, wenn das Telegramm mit der ersten Adressierungstechnik 500 als Durchlauftelegramm und hierbei insbesondere als EtherCAT Telegramm ausgebildet ist, da dieser Wert mit dem echtzeitfähigen EtherCAT Datenübertragungsprotokoll verknüpft ist. Die Telegramme mit der zweiten Adressierungstechnik 510 weisen diesen Wert im Typfeld nicht auf, daher kann die erste Verarbeitungseinheit 430 die Telegramme beispielsweise jeweils anhand des Typfelds zur Verarbeitung unterscheiden. Zum Beispiel kann in diesem Zusammenhang eingestellt werden, dass die erste Verarbeitungseinheit 430 Telegramme mit der zweiten Adressierungstechnik 510 und dem von den Telegrammen mit der ersten Adressierungstechnik 500 abweichenden Typfeld verwirft, statt sie gemäß einer alternativen Einstellung der ersten Verarbeitungseinheit 430 weiterzuleiten.

Ferner ist denkbar, dass die Selektion der Telegramme mit der ersten Adressierungstechnik 500 und der Telegramme mit der zweiten Adressierungstechnik 510 durch die erste Verarbeitungseinheit 430 und die zweite Verarbeitungseinheit 440 in der zweiten Filterauslegung 610 jeweils auf der Grundlage des oben erläuterten festgelegten Zeitfensters erfolgt, in dem jeweils Telegramme mit der ersten Adressierungstechnik 500 beziehungsweise Telegramme mit der zweiten Adressierungstechnik 510 über den Empfangs-Port 400 von der Empfangslogik 410 empfangen werden. Die oben genannten Merkmale können für die zweite Filterauslegung 610 ebenfalls gelten und werden daher nicht erneut wiederholt. Zudem kann die Selektion der Telegramme mit der ersten Adressierungstechnik 500 und der Telegramme mit der zweiten Adressierungstechnik 510 auf der Grundlage des oben genannten Umschalttelegramms basieren, mit dem das Weiterleiten von Telegrammen mit der ersten Adressierungstechnik 500 an die Sendelogik 415 durch die erste Verarbeitungseinheit 430 umgeschaltet wird, oder mit dem das Weiterleiten von Telegrammen mit der zweiten Adressierungstechnik 510 an die Sendelogik 415 durch die zweite Verarbeitungseinheit 440 umgeschaltet wird. Auch an der Stelle sollen die oben genannten Merkmale nicht wiederholt werden, sie können jedoch für die zweite Filterauslegung 610 gleichermaßen gelten.

Die Empfangslogik 410 ist in der dritten Filterauslegung 615 in Figur 3 analog zur zweiten Filterauslegung 610 ausgelegt, die über den Empfangs-Port 400 des Netzwerkteilnehmers 115 empfangenen Telegramme mit der ersten Adressierungstechnik 500 und die Telegramme mit der zweiten Adressierungstechnik 510 zu verdoppeln. Die Empfangslogik 410 leitet jeweils ein Telegramm an die erste Verarbeitungseinheit 430 und an die zweite Verarbeitungseinheit 440 weiter. Die Sendelogik 415 ist ausgelegt, nur Telegramme mit der ersten Adressierungstechnik 500 von der ersten Verarbeitungseinheit 430 und nur Telegramme mit der zweiten Adressierungstechnik 510 von der zweiten Verarbeitungseinheit 440 an den Sende-Port 405 weiterzuleiten. Die Sendelogik 415 kann also jeweils Telegramme mit der ersten Adressierungstechnik 500 und Telegramme mit der zweiten Adressierungstechnik 510 über den ersten Eingangs-Port der Sendelogik 415 empfangen und jeweils Telegramme mit der ersten Adressierungstechnik 500 und Telegramme mit der zweiten Adressierungstechnik 510 über den zweiten Eingangs-Port der Sendelogik 415 empfangen. Dabei können beide Telegramme über die beiden Eingangs-Ports von der Sendelogik 415 empfangen werden, wobei ein Telegramm von der ersten Verarbeitungseinheit 430 nur um die Durchlaufverzögerungszeit verzögert am ersten Eingangs-Port der Sendelogik 415 eintrifft, während ein Telegramm von der zweiten Verarbeitungseinheit 440 mindestens bis zum vollständigen Empfang der Zieladresse verzögert am zweiten Eingangs-Port der Sendelogik 415 eintrifft. In der Regel ist die Verzögerung durch die zweite Verarbeitungseinheit 440 größer, also zeitlich länger ausgebildet, als die Durchlaufverzögerungszeit durch die erste Verarbeitungseinheit 430. Die Sendelogik 415 ist in der dritten Filterauslegung 610 als Telegramm-Weiche ausgebildet.

Gemäß der Einstellung der Sendelogik 415, kann die Sendelogik 415 Telegramme mit der ersten Adressierungstechnik 500, die die Sendelogik 415 von der ersten Verarbeitungseinheit 430 über den ersten Eingangs-Port der Sendelogik 415 empfangen hat, an den Sende-Port 405 des Netzwerkteilnehmers 115 weiterleiten. Auch kann die Sendelogik 415 ihrer Einstellung vom Masterteilnehmer 105 gemäß, die Telegramme mit der zweiten Adressierungstechnik 510, die die Sendelogik 415 von der zweiten Verarbeitungseinheit 440 bei Nichtübereinstimmung der Zieladressen mit der Hardware-Adresse der zweiten Verarbeitungseinheit 440 über den zweiten Eingangs-Port der Sendelogik 415 empfangen hat, an den Sende-Port 405 weiterleiten.

Die Einstellung der Sendelogik 415 zur Selektion der Weiterleitung der Telegramme mit der ersten Adressierungstechnik 500 und der Telegramme mit der zweiten Adressierungstechnik 510 über den Ausgangs-Port der Sendelogik 415 an den Sende-Port 405 des Netzwerkteilnehmers 115 kann dabei auf der Grundlage des oben erläuterten festgelegten Zeitfensters erfolgen, in dem zum Beispiel jeweils nur Telegramme mit der ersten Adressierungstechnik 500 oder Telegramme mit der zweiten Adressierungstechnik 510 vom Masterteilnehmer 105 versendet werden. Auch kann das festgelegte Zeitfenster wie vorstehend beschrieben wurde, zum Beispiel in zwei Zeitabschnitte unterteilt werden, die sich zyklisch wiederholen. Weiterhin kann die Selektion der Telegramme mit der ersten Adressierungstechnik 500 und der zweiten Adressierungstechnik 510 durch die Sendelogik 415 auf der Grundlage von Umschalttelegrammen, wie oben im Zusammenhang mit der ersten Filterauslegung 600 erläutert wurde, erfolgen. Überdies kann die Sendelogik 415 die Telegramme mit der ersten Adressierungstechnik 500 und die Telegramme mit der zweiten Adressierungstechnik 510 aufgrund der verschiedenartigen Ausbildung deren Kopfabschnitte unterscheiden. An dieser Stelle wird zu den einzelnen Varianten auf die oben stehende Beschreibung verwiesen. Im Zusammenhang mit der Selektion der Telegramme mit der ersten Adressierungstechnik 500 und der Telegramme mit der zweiten Adressierungstechnik 510 über die verschiedenartigen Ausbildungen der Kopfabschnitte ist auch denkbar, dass die Empfangslogik 410 neben der Eigenschaft der Duplizierung der Telegramme, auch die Telegramme mit der ersten Adressierungstechnik 500 und die Telegramme mit der zweiten Adressierungstechnik 510 selbst über deren unterschiedliche Kopfabschnitte erkennen kann, und ein Steuersignal an die Sendelogik 415 weiterleitet. Mit dem Steuersignal kann der Sendelogik 415 der jeweilige Eingangs-Port der Sendelogik 415 angezeigt werden, über den die Sendelogik 415 ein Telegramm mit der ersten Adressierungstechnik 500 oder ein Telegramm mit der zweiten Adressierungstechnik 510 an den Sende-Port weiterleiten soll.

Für die zweite und die dritte Filterauslegung 610, 615 ist beim Empfang von zwei Telegrammen mit der zweiten Adressierungstechnik 510 neben den genannten Selektionsmöglichkeiten auch eine Einstellung denkbar, die eine Weiterleitung eines Telegramms mit der zweiten Adressierungstechnik 510 von der ersten Verarbeitungseinheit 430, das die Sendelogik 415 über den ersten Eingangs-Port empfangen hat, an den Sende-Port 405 erlaubt, sofern die erste Verarbeitungseinheit 430 in der zweiten Filterauslegung 610 zur Weiterleitung der Telegramme mit der zweiten Adressierungstechnik 510 und nicht zum Verwerfen dessen eingestellt ist. Die erste Verarbeitungseinheit 430 kann das Telegramm mit der zweiten Adressierungstechnik 510 nur um die Durchlaufverzögerungszeit verzögert an den ersten Eingangs-Port der Sendelogik 415 weiterleiten, was früher sein kann als die Sendelogik 415 das Telegramm mit der zweiten Adressierungstechnik 510 von der zweiten Verarbeitungseinheit 440 über den zweiten Eingangs-Port empfangen kann. Auf diese Weise kann die Verzögerungszeit im Automatisierungsnetzwerk 100 ebenfalls reduziert werden. Dies setzt jedoch voraus, dass die Zieladresse der Telegramme mit der zweiten Adressierungstechnik 510 nicht mit der Hardware-Adresse der zweiten Verarbeitungseinheit 440 übereinstimmt.

Für die erste Filterauslegung 600 sind in Figur 3 Pfeile mit durchgezogenen Linien und Pfeile mit gestrichelten Linien verwendet worden, um anzuzeigen, dass über die Empfangslogik 410 jeweils nur Telegramme mit der zweiten Adressierungstechnik 510 an die erste Speichereinheit 420 und die zweite Verarbeitungseinheit 440, und im Fall der Nichtübereinstimmung der Zieladressen mit der Hardware-Adresse der zweiten Verarbeitungseinheit 440, an die Sendelogik 415 weitergeleitet werden. Auch leitet die Empfangslogik 410 nur Telegramme mit der ersten Adressierungstechnik 500 über die erste Verarbeitungseinheit 430 an die Sendelogik 415 weiter. Der Pfeil mit durchgezogener Linie zwischen der Sendelogik 415 und dem Sende-Port 405 des zweiten Netzwerkteilnehmers 115 schränkt die Weiterleitung der Telegramme durch die Sendelogik 415 jedoch nicht auf Telegramme mit der zweiten Adressierungstechnik 510 ein, sondern dient einzig der Kenntlichmachung der Weiterleitung eines Telegramms mit der ersten Adressierungstechnik 500 oder eines Telegramms mit der zweiten Adressierungstechnik 510.

In der zweiten Filterauslegung 610 dient der Pfeil mit der gestrichelten Linie zwischen der ersten Verarbeitungseinheit 430 und der Sendelogik 415 zur Illustration einer möglichen Weiterleitung von Telegrammen mit der ersten Adressierungstechnik 500, da diese von der ersten Verarbeitungseinheit 430 selektiert werden, während die Telegramme mit der zweiten Adressierungstechnik 510 von der ersten Verarbeitungseinheit 430 zum Beispiel verworfen werden. Gleichermaßen ist der Pfeil mit der gestrichelten Linie zwischen der zweiten Verarbeitungseinheit 440 und der Sendelogik 415 in Bezug auf die Selektion der Weiterleitung von Telegrammen mit der zweiten Adressierungstechnik 510 durch die zweite Verarbeitungseinheit 440 bei Nichtübereinstimmung der Zieladressen mit der Hardware-Adresse der zweiten Verarbeitungseinheit 440 zu interpretieren.

Da die Selektion der Telegramme mit der ersten Adressierungstechnik 500 und der Telegramme mit der zweiten Adressierungstechnik 510 in der dritten Filterauslegung 615 durch die Sendelogik 415 erfolgt, sind zur Darstellung in Figur 3 einheitlich ausgebildete Pfeile verwendet worden, da je nach Art der von der Empfangslogik 410 duplizierten Telegramme, entweder Telegramme mit der ersten Adressierungstechnik 500 oder Telegramme mit der zweiten Adressierungstechnik 510 die beiden Zweige von der Empfangslogik 410 bis zur Sendelogik 415 durchlaufen. Die Darstellungen der ersten bis dritten Filterauslegungen 600, 610, 615 sind jedoch nicht auf die exemplarisch gewählten Pfeile eingeschränkt.

Der vorgeschlagene Netzwerkteilnehmer 115 kann auch in anderen Bussystemen beziehungsweise Automatisierungsnetzwerken eingesetzt werden und weitere Empfangs-Ports und Sende-Ports umfassen. Die weiteren Empfangs- und Sende-Ports können die vorstehenden Komponenten zur Selektion der Telegramme mit der ersten Adressierungstechnik 500 und der Telegramme mit der zweiten Adressierungstechnik 510 aufweisen und die Telegramme nach der ersten bis dritten Filterauslegung 600, 610, 615 und den oben genannten Methoden selektieren. Für den Fall, dass der Netzwerkteilnehmer 115 weitere Empfangs- und Sende-Ports umfasst, und weitere Empfangslogiken in der ersten Filterauslegung 600 zur Selektion der Telegramme mit der ersten Adressierungstechnik 500 und der Telegramme mit der zweiten Adressierungstechnik 510 ausgelegt sind, ist es erforderlich, dass der Masterteilnehmer 105 eine Einstellung der weiteren Empfangslogiken vornimmt, damit diese Telegramme mit der ersten Adressierungstechnik 500 auf dem für die Telegramme vorgesehenen Weg weiterleitet. Für die Telegramme mit der zweiten Adressierungstechnik 510 können die weiteren Empfangslogiken der weiteren Emfpangs-und Sende-Ports die Telegramme anhand der Zieladresse auf dem jeweiligen Weg weiterleiten. Dafür kann eine gesonderte Einstellung durch den Masterteilnehmer 105 entfallen.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

### Bezugszeichenliste

- 100: Automatisierungsnetzwerk
- 105: Masterteilnehmer

- 300: Automatisierungsnetzwerkteilnehmer

- 110: erster weiterer Netzwerkteilnehmer
- 115: Netzwerkteilnehmer
- 125: zweiter weiterer Netzwerkteilnehmer

- 120: Netzwerkverteiler

- 200: Datenleitungsnetz
- 205: erste Datenleitung
- 210: zweite Datenleitung
- 215: dritte Datenleitung

- P0: erster Ein-/Ausgangs-Port
- P1: zweiter Ein-/Ausgangs-Port
- P2: dritter Ein-/Ausgangs-Port

- RX: Empfang
- TX: Senden

- 400: Empfangs-Port
- 405: Sende-Port
- 410: Empfangslogik
- 415: Sendelogik
- 420: erste Speichereinheit
- 425: zweite Speichereinheit
- 430: erste Verarbeitungseinheit
- 435: erster Prozessorchip
- 440: zweite Verarbeitungseinheit
- 445: zweiter Prozessorchip
- 450: dritter Prozessorchip
- 455: Sendesignal
- 500: Telegramme mit der ersten Adressierungstechnik
- 510: Telegramme mit der zweiten Adressierungstechnik
- 520: erzeugtes Telegramm mit der zweiten Adressierungstechnik

- 600: erste Filterauslegung
- 610: zweite Filterauslegung
- 615: dritte Filterauslegung

## Patentansprüche

1. Netzwerkteilnehmer (115) für ein Automatisierungsnetzwerk (100), der wenigstens einen Empfangs-Port (400) und wenigstens einen Sende-Port (405) aufweist, an die weitere Automatisierungsnetzwerkteilnehmer (300) über ein Datenleitungsnetz (200) angeschlossen sein können,
wobei der Netzwerkteilnehmer (115) ausgelegt ist, Telegramme mit einer ersten Adressierungstechnik (500), die zur Verarbeitung im Durchlauf für den Netzwerkteilnehmer (115) und weitere Automatisierungsnetzwerkteilnehmer (300) als Durchlauftelegramme ausgebildet sind, und Telegramme mit einer zweiten Adressierungstechnik (510), die zur Verarbeitung durch einen einzelnen Automatisierungsnetzwerkteilnehmer (300) als Einzeltelegramme ausgebildet sind, über den Empfangs-Port (400) zu empfangen und über den Sende-Port (405) zu versenden,
wobei der Netzwerkteilnehmer (115) eine erste Verarbeitungseinheit (430) zur Verarbeitung der Telegramme mit der ersten Adressierungstechnik (500) und eine zweite Verarbeitungseinheit (440) zur Verarbeitung der Telegramme mit der zweiten Adressierungstechnik (510) umfasst,
wobei der Netzwerkteilnehmer (115) eine Empfangslogik (410), die mit dem Empfangs-Port (400) und mit der ersten Verarbeitungseinheit (430) und mit der zweiten Verarbeitungseinheit (440) verbunden ist, und eine Sendelogik (415), die mit dem Sende-Port (405) und mit der ersten Verarbeitungseinheit (430) und der zweiten Verarbeitungseinheit (440) verbunden ist, aufweist,
wobei die Empfangslogik (410) in einer ersten Filterauslegung (600) ausgelegt ist, von über den Empfangs-Port (400) empfangene Telegramme mit der ersten Adressierungstechnik (500) an die erste Verarbeitungseinheit (430) und von über den Empfangs-Port (400) empfangene Telegramme mit der zweiten Adressierungstechnik (510) an die zweite Verarbeitungseinheit (440) weiterzuleiten, und die Sendelogik (415) ausgelegt ist, von der ersten Verarbeitungseinheit (430) beziehungsweise von der zweiten Verarbeitungseinheit (440) empfangene Telegramme an den Sende-Port (405) weiterzuleiten, oder
wobei die Empfangslogik (410) in einer zweiten Filterauslegung (610) ausgelegt ist, von über den Empfangs-Port (400) empfangene Telegramme mit der ersten Adressierungstechnik (500) oder von über den Empfangs-Port (400) empfangene Telegramme mit der zweiten Adressierungstechnik (510) zu verdoppeln und jeweils ein Telegramm an die erste Verarbeitungseinheit (430) und an die zweite Verarbeitungseinheit (440) weiterzuleiten, und wobei die erste Verarbeitungseinheit (430) ausgelegt ist, Telegramme mit der zweiten Adressierungstechnik (510) zu verwerfen und die zweite Verarbeitungseinheit (440) ausgelegt ist, Telegramme mit der ersten Adressierungstechnik (500) zu verwerfen, und wobei die Sendelogik (415) ausgelegt ist, von der ersten Verarbeitungseinheit (430) beziehungsweise von der zweiten Verarbeitungseinheit (440) empfangene Telegramme an den Sende-Port (405) weiterzuleiten, oder
wobei die Empfangslogik (410) in einer dritten Filterauslegung (615) ausgelegt ist, von über den Empfangs-Port (400) empfangene Telegramme mit der ersten Adressierungstechnik (500) und von über den Empfangs-Port (400) empfangene Telegramme mit der zweiten Adressierungstechnik (510) zu verdoppeln und jeweils ein Telegramm an die erste Verarbeitungseinheit (430) und an die zweite Verarbeitungseinheit (440) weiterzuleiten, und wobei die Sendelogik (415) ausgelegt ist, nur Telegramme mit der ersten Adressierungstechnik (500) von der ersten Verarbeitungseinheit (430) an den Sende-Port (405) weiterzuleiten und Telegramme mit der ersten Adressierungstechnik (500) von der zweiten Verarbeitungseinheit (440) zu verwerfen und nur Telegramme mit der zweiten Adressierungstechnik (510) von der zweiten Verarbeitungseinheit (440) an den Sende-Port (405) weiterzuleiten und Telegramme mit der zweiten Adressierungstechnik (510) von der ersten Verarbeitungseinheit (430) zu verwerfen.

2. Netzwerkteilnehmer (115) nach Anspruch 1,
wobei die Empfangslogik (410) in der ersten Filterauslegung (600) ausgelegt ist, die Telegramme mit der ersten Adressierungstechnik (500) und die Telegramme mit der zweiten Adressierungstechnik (510) auf der Grundlage einer Ausbildung der Telegramme zu unterscheiden, bei der jeweils ein Kopfabschnitt der Telegramme mit der ersten Adressierungstechnik (500) verschieden von einem Kopfabschnitt der Telegramme mit der zweiten Adressierungstechnik (510) ausgebildet ist, oder
wobei die erste Verarbeitungseinheit (430) und die zweite Verarbeitungseinheit (440) in der zweiten Filterauslegung (610) ausgelegt sind, die Telegramme mit der ersten Adressierungstechnik (500) und die Telegramme mit der zweiten Adressierungstechnik (510) auf der Grundlage der Ausbildung der Telegramme zu unterscheiden, bei der jeweils der der Kopfabschnitt der Telegramme mit der ersten Adressierungstechnik (500) verschieden von dem Kopfabschnitt der Telegramme mit der zweiten Adressierungstechnik (510) ausgebildet ist, oder
wobei die Sendelogik (415) in der dritten Filterauslegung (615) ausgelegt ist, die Telegramme mit der ersten Adressierungstechnik (500) und die Telegramme mit der zweiten Adressierungstechnik (510) auf der Grundlage der Ausbildung der Telegramme zu unterscheiden, bei der jeweils der Kopfabschnitt der Telegramme mit der ersten Adressierungstechnik (500) verschieden von dem Kopfabschnitt der Telegramme mit der zweiten Adressierungstechnik (510) ausgebildet ist.

3. Netzwerkteilnehmer (115) nach Anspruch 1,
wobei die Empfangslogik (410) in der ersten Filterauslegung (600) ausgelegt ist, die Telegramme mit der ersten Adressierungstechnik (500) und die Telegramme mit der zweiten Adressierungstechnik (510) auf der Grundlage eines festgelegten Zeitfensters, in dem jeweils Telegramme mit der ersten Adressierungstechnik (500) beziehungsweise Telegramme mit der zweiten Adressierungstechnik (510) über den Empfangs-Port (400) von der Empfangslogik (410) empfangen werden, zu unterscheiden, oder
wobei die erste Verarbeitungseinheit (430) und die zweite Verarbeitungseinheit (440) in der zweiten Filterauslegung (610) ausgelegt sind, die Telegramme mit der ersten Adressierungstechnik (500) und die Telegramme mit der zweiten Adressierungstechnik (510) auf der Grundlage des festgelegten Zeitfensters, in dem jeweils Telegramme mit der ersten Adressierungstechnik (500) beziehungsweise Telegramme mit der zweiten Adressierungstechnik (510) über den Empfangs-Port (400) von der Empfangslogik (410) empfangen werden, zu unterscheiden, oder
wobei die Sendelogik (415) in der dritten Filterauslegung (615) ausgelegt ist, die Telegramme mit der ersten Adressierungstechnik (500) und die Telegramme mit der zweiten Adressierungstechnik (510) auf der Grundlage des festgelegten Zeitfensters, in dem jeweils Telegramme mit der ersten Adressierungstechnik (500) beziehungsweise Telegramme mit der zweiten Adressierungstechnik (510) über den Empfangs-Port (400) von der Empfangslogik (410) empfangen werden, zu unterscheiden.

4. Netzwerkteilnehmer (115) nach Anspruch 1,
wobei die Empfangslogik (410) in der ersten Filterauslegung (600) ausgelegt ist, die Telegramme mit der ersten Adressierungstechnik (500) und die Telegramme mit der zweiten Adressierungstechnik (510) auf der Grundlage eines Umschalttelegramms zu unterscheiden, mit dem das Weiterleiten von über den Empfangs-Port (400) empfangenen Telegrammen mit der ersten Adressierungstechnik (500) an die erste Verarbeitungseinheit (430) oder von über den Empfangs-Port (400) empfangenen Telegrammen mit der zweiten Adressierungstechnik (510) an die zweite Verarbeitungseinheit (440) durch die Empfangslogik (410) umgeschaltet wird, oder
wobei die erste Verarbeitungseinheit (430) und die zweite Verarbeitungseinheit (440) in der zweiten Filterauslegung (610) ausgelegt sind, die Telegramme mit der ersten Adressierungstechnik (500) und die Telegramme mit der zweiten Adressierungstechnik (510) auf der Grundlage des Umschalttelegramms zu unterscheiden, mit dem das Weiterleiten von Telegrammen mit der ersten Adressierungstechnik (500) an die Sendelogik (415) durch die erste Verarbeitungseinheit (430) umgeschaltet wird oder mit dem das Weiterleiten von Telegrammen mit der zweiten Adressierungstechnik (510) an die Sendelogik (415) durch die zweite Verarbeitungseinheit (440) umgeschaltet wird, oder
wobei die Sendelogik (415) in der dritten Filterauslegung (615) ausgelegt ist, die Telegramme mit der ersten Adressierungstechnik (500) und die Telegramme mit der zweiten Adressierungstechnik (510) auf der Grundlage des Umschalttelegramms zu unterscheiden, mit dem das Weiterleiten der von der ersten Verarbeitungseinheit (430) empfangenen Telegramme mit der ersten Adressierungstechnik (500) an den Sende-Port (405) oder der von der zweiten Verarbeitungseinheit (440) empfangenen Telegramme mit der zweiten Adressierungstechnik (510) an den Sende-Port (405) durch die Sendelogik (415) umgeschaltet wird.

5. Netzwerkteilnehmer (115) nach einem der Ansprüche 1 bis 4,
wobei die Telegramme mit der ersten Adressierungstechnik (500) als Durchlauftelegramme, zur Verarbeitung durch mehrere Automatisierungsnetzwerkteilnehmer (300) und die Telegramme mit der zweiten Adressierungstechnik (510) als Einzeltelegramme, zur Verarbeitung jeweils durch einen einzelnen Automatisierungsnetzwerkteilnehmer (300) verwirklicht sind,
wobei die zweite Verarbeitungseinheit (440) des Netzwerkteilnehmers (115) ausgelegt ist, jeweils anhand einer Zieladresse der Einzeltelegramme zu prüfen, ob ein Einzeltelegramm für den Netzwerkteilnehmer (115) bestimmt ist,
wobei, wenn die Zieladresse eines Einzeltelegramms jeweils mit einer Hardware-Adresse des Netzwerkteilnehmers (115) übereinstimmt, die zweite Verarbeitungseinheit (440) ausgelegt ist, das Einzeltelegramm zu verarbeiten, und
wobei die zweite Verarbeitungseinheit (440) andernfalls ausgelegt ist, das Einzeltelegramm an die Sendelogik (415) zur Ausgabe über den Sende-Port (405) weiterzuleiten.

6. Netzwerkteilnehmer (115) nach Anspruch 5,
wobei die Durchlauftelegramme als EtherCAT Telegramme und die Einzeltelegramme als Ethernet Telegramme ausgebildet sind.

7. Netzwerkteilnehmer (115) nach einem der Ansprüche 1 bis 6,
wobei die zweite Verarbeitungseinheit (440) weiterhin ausgelegt ist, Telegramme mit der zweiten Adressierungstechnik (510) zu erzeugen und die Telegramme mit der zweiten Adressierungstechnik (510) an die Sendelogik (415) zur Ausgabe über den Sende-Port (405) weiterzuleiten.

8. Netzwerkteilnehmer (115) nach Anspruch 7,
wobei der Netzwerkteilnehmer (115) ausgelegt ist, wenn der Netzwerkteilnehmer (115) gleichzeitig über den Empfangs-Port (400) ein Telegramm mit der ersten Adressierungstechnik (500) oder ein Telegramm mit der zweiten Adressierungstechnik (510) empfängt, das über den Empfangs-Port (400) empfangene Telegramm mit der ersten Adressierungstechnik (500) oder das über den Empfangs-Port (400) empfangene Telegramm mit der zweiten Adressierungstechnik (510) zwischen zu speichern und die Sendelogik (415) ausgelegt ist, das von der zweiten Verarbeitungseinheit (440) erzeugte Telegramm mit der zweiten Adressierungstechnik (510) zur Ausgabe über den Sende-Port (405) weiterzuleiten, oder
wobei der Netzwerkteilnehmer (115) weiterhin ausgelegt ist, wenn der Netzwerkteilnehmer (115) gleichzeitig über den Empfangs-Port (400) ein Telegramm mit der ersten Adressierungstechnik (500) oder ein Telegramm mit der zweiten Adressierungstechnik (510) empfängt, das von der zweiten Verarbeitungseinheit (440) erzeugte Telegramm mit der zweiten Adressierungstechnik (510) zu fragmentieren und das über den Empfangs-Port (400) empfangene Telegramm mit der ersten Adressierungstechnik (500) durch die Sendelogik (415) zur Ausgabe über den Sende-Port (405) weiterzuleiten oder das über den Empfangs-Port (400) empfangene Telegramm mit der zweiten Adressierungstechnik (510) durch die Sendelogik (415) zur Ausgabe über den Sende-Port (405) weiterzuleiten.

9. Netzwerkteilnehmer (115) nach Anspruch 8,
wobei die Sendelogik (415) des Netzwerkteilnehmers (115) ausgelegt ist, wenn der Netzwerkteilnehmer (115) gleichzeitig über den Empfangs-Port (400) ein Telegramm mit der ersten Adressierungstechnik (500) oder ein Telegramm mit der zweiten Adressierungstechnik (510) empfängt, das über den Empfangs-Port (400) empfangene Telegramm mit der ersten Adressierungstechnik (500) oder das über den Empfangs-Port (400) empfangene Telegramm mit der zweiten Adressierungstechnik (510) zwischen zu speichern, und das von der zweiten Verarbeitungseinheit (440) erzeugte Telegramm mit der zweiten Adressierungstechnik (510) zur Ausgabe über den Sende-Port (405) weiterzuleiten, oder wobei die Sendelogik (415) des Netzwerkteilnehmers (115) weiterhin ausgelegt ist, wenn der Netzwerkteilnehmer (115) gleichzeitig über den Empfangs-Port (400) ein Telegramm mit der ersten Adressierungstechnik (500) oder ein Telegramm mit der zweiten Adressierungstechnik (510) empfängt, das von der zweiten Verarbeitungseinheit (440) erzeugte Telegramm mit der zweiten Adressierungstechnik (510) zu fragmentieren und das über den Empfangs-Port (400) empfangene Telegramm mit der ersten Adressierungstechnik (500) zur Ausgabe über den Sende-Port (405) weiterzuleiten oder das über den Empfangs-Port (400) empfangene Telegramm mit der zweiten Adressierungstechnik (510) zur Ausgabe über den Sende-Port (405) weiterzuleiten.

10. Automatisierungsnetzwerk (100),
wobei das Automatisierungsnetzwerk (100) Automatisierungsnetzwerkteilnehmer (300) umfasst,
wobei wenigstens ein Automatisierungsnetzwerkteilnehmer (300) als Masterteilnehmer (105) ausgelegt ist, der Telegramme mit einer ersten Adressierungstechnik (500) und Telegramme mit einer zweiten Adressierungstechnik (510) über ein Datenleitungsnetz (200) an die Automatisierungsnetzwerkteilnehmer (300) ausgibt, und
wobei wenigstens ein Automatisierungsnetzwerkteilnehmer (300) als Netzwerkteilnehmer (115) nach einem der Ansprüche 1 bis 9 ausgelegt ist.

## Claims

1. Network subscriber (115) for an automation network (100), said network subscriber having at least one receiving port (400) and at least one transmitting port (405), to which further automation network subscribers (300) may be connected via a data line network (200), wherein the network subscriber (115) is designed to receive messages with a first addressing technique (500), which are designed as on-the-fly messages for on-the-fly processing for the network subscriber (115) and further automation network subscribers (300), and messages with a second addressing technique (510), which are designed as individual messages for processing by an individual automation network subscriber (300), via the receiving port (400) and to transmit said messages via the transmitting port (405),
wherein the network subscriber (115) comprises a first processing unit (430) for processing the messages with the first addressing technique (500) and a second processing unit (440) for processing the messages with the second addressing technique (510),
wherein the network subscriber (115) has a receiving logic unit (410), which is connected to the receiving port (400) and to the first processing unit (430) and to the second processing unit (440), and a transmitting logic unit (415), which is connected to the transmitting port (405) and to the first processing unit (430) and to the second processing unit (440),
wherein the receiving logic unit (410) in a first filter design (600) is designed to forward messages with the first addressing technique (500), which are received via the receiving port (400), to the first processing unit (430) and to forward messages with the second addressing technique (510), which are received via the receiving port (400), to the second processing unit (440), and the transmitting logic unit (415) is designed to forward messages received from the first processing unit (430) and/or from the second processing unit (440) to the transmitting port (405), or
wherein the receiving logic unit (410) in a second filter design (610) is designed to duplicate messages with the first addressing technique (500) which are received via the receiving port (400) or messages with the second addressing technique (510) which are received via the receiving port (400) and to respectively forward a message to the first processing unit (430) and to the second processing unit (440), and wherein the first processing unit (430) is designed to reject messages with the second addressing technique (510) and the second processing unit (440) is designed to reject messages with the first addressing technique (500), and wherein the transmitting logic unit (415) is designed to forward messages received from the first processing unit (430) and/or from the second processing unit (440) to the transmitting port (405), or
wherein the receiving logic unit (410) in a third filter design (615) is designed to duplicate messages with the first addressing technique (500) which are received via the receiving port (400) and messages with the second addressing technique (510) which are received via the receiving port (400) and to respectively forward a message to the first processing unit (430) and to the second processing unit (440), and wherein the transmitting logic unit (415) is designed to forward only messages with the first addressing technique (500) from the first processing unit (430) to the transmitting port (405) and to reject messages with the first addressing technique (500) from the second processing unit (440) and to forward only messages with the second addressing technique (510) from the second processing unit (440) to the transmitting port (405) and to reject messages with the second addressing technique (510) from the first processing unit (430).

2. Network subscriber (115) according to Claim 1, wherein the receiving logic unit (410) in the first filter design (600) is designed to distinguish the messages with the first addressing technique (500) and the messages with the second addressing technique (510) on the basis of a design of the messages, in which a header section of the messages with the first addressing technique (500) respectively differs from a header section of the messages with the second addressing technique (510), or
wherein the first processing unit (430) and the second processing unit (440) in the second filter design (610) are designed to distinguish the messages with the first addressing technique (500) and the messages with the second addressing technique (510) on the basis of the design of the messages, in which the header section of the messages with the first addressing technique (500) respectively differs from the header section of the messages with the second addressing technique (510), or wherein the transmitting logic unit (415) in the third filter design (615) is designed to distinguish the messages with the first addressing technique (500) and the messages with the second addressing technique (510) on the basis of the design of the messages, in which the header section of the messages with the first addressing technique (500) respectively differs from the header section of the messages with the second addressing technique (510).

3. Network subscriber (115) according to Claim 1, wherein the receiving logic unit (410) in the first filter design (600) is designed to distinguish the messages with the first addressing technique (500) and the messages with the second addressing technique (510) on the basis of a stipulated time window in which messages with the first addressing technique (500) or messages with the second addressing technique (510) are respectively received by the receiving logic unit (410) via the receiving port (400), or
wherein the first processing unit (430) and the second processing unit (440) in the second filter design (610) are designed to distinguish the messages with the first addressing technique (500) and the messages with the second addressing technique (510) on the basis of the stipulated time window in which messages with the first addressing technique (500) or messages with the second addressing technique (510) are respectively received by the receiving logic unit (410) via the receiving port (400), or
wherein the transmitting logic unit (415) in the third filter design (615) is designed to distinguish the messages with the first addressing technique (500) and the messages with the second addressing technique (510) on the basis of the stipulated time window in which messages with the first addressing technique (500) or messages with the second addressing technique (510) are respectively received by the receiving logic unit (410) via the receiving port (400).

4. Network subscriber (115) according to Claim 1,
wherein the receiving logic unit (410) in the first filter design (600) is designed to distinguish the messages with the first addressing technique (500) and the messages with the second addressing technique (510) on the basis of a switchover message, with which the forwarding of messages with the first addressing technique (500), which are received via the receiving port (400), to the first processing unit (430) or of messages with the second addressing technique (510), which are received via the receiving port (400), to the second processing unit (440) by the receiving logic unit (410) is switched over, or
wherein the first processing unit (430) and the second processing unit (440) in the second filter design (610) are designed to distinguish the messages with the first addressing technique (500) and the messages with the second addressing technique (510) on the basis of the switchover message, with which the forwarding of messages with the first addressing technique (500) to the transmitting logic unit (415) by the first processing unit (430) is switched over or with which the forwarding of messages with the second addressing technique (510) to the transmitting logic unit (415) by the second processing unit (440) is switched over, or
wherein the transmitting logic unit (415) in the third filter design (615) is designed to distinguish the messages with the first addressing technique (500) and the messages with the second addressing technique (510) on the basis of the switchover message, with which the forwarding of the messages with the first addressing technique (500), which are received from the first processing unit (430), to the transmitting port (405) or of the messages with the second addressing technique (510), which are received from the second processing unit (440), to the transmitting port (405) by the transmitting logic unit (415) is switched over.

5. Network subscriber (115) according to any one of Claims 1 to 4,
wherein the messages with the first addressing technique (500) are in the form of on-the-fly messages for processing by a plurality of automation network subscribers (300) and the messages with the second addressing technique (510) are in the form of individual messages for processing by an individual automation network subscriber (300) in each case,
wherein the second processing unit (440) of the network subscriber (115) is designed to check whether an individual message is intended for the network subscriber (115), in each case on the basis of a destination address of the individual messages,
wherein, if the destination address of an individual message respectively corresponds to a hardware address of the network subscriber (115), the second processing unit (440) is designed to process the individual message, and
wherein the second processing unit (440) is otherwise designed to forward the individual message to the transmitting logic unit (415) for output via the transmitting port (405).

6. Network subscriber (115) according to Claim 5, wherein the on-the-fly messages are in the form of EtherCAT messages and the individual messages are in the form of Ethernet messages.

7. Network subscriber (115) according to any one of Claims 1 to 6,
wherein the second processing unit (440) is also designed to generate messages with the second addressing technique (510) and to forward the messages with the second addressing technique (510) to the transmitting logic unit (415) for output via the transmitting port (405).

8. Network subscriber (115) according to Claim 7, wherein the network subscriber (115) is designed, if the network subscriber (115) simultaneously receives a message with the first addressing technique (500) or a message with the second addressing technique (510) via the receiving port (400), to buffer the message with the first addressing technique (500) received via the receiving port (400) or the message with the second addressing technique (510) received via the receiving port (400), and the transmitting logic unit (415) is designed to forward the message with the second addressing technique (510) generated by the second processing unit (440) for output via the transmitting port (405), or
wherein the network subscriber (115) is also designed, if the network subscriber (115) simultaneously receives a message with the first addressing technique (500) or a message with the second addressing technique (510) via the receiving port (400), to fragment the message with the second addressing technique (510) generated by the second processing unit (440) and to forward the message with the first addressing technique (500) received via the receiving port (400) by means of the transmitting logic unit (415) for output via the transmitting port (405) and to forward the message with the second addressing technique (510) received via the receiving port (400) by means of the transmitting logic unit (415) for output via the transmitting port (405).

9. Network subscriber (115) according to Claim 8,
wherein the transmitting logic unit (415) of the network subscriber (115) is designed, if the network subscriber (115) simultaneously receives a message with the first addressing technique (500) or a message with the second addressing technique (510) via the receiving port (400), to buffer the message with the first addressing technique (500) received via the receiving port (400) or the message with the second addressing technique (510) received via the receiving port (400) and to forward the message with the second addressing technique (510) generated by the second processing unit (440) for output via the transmitting port (405), or
wherein the transmitting logic unit (415) of the network subscriber (115) is also designed, if the network subscriber (115) simultaneously receives a message with the first addressing technique (500) or a message with the second addressing technique (510) via the receiving port (400), to fragment the message with the second addressing technique (510) generated by the second processing unit (440) and to forward the message with the first addressing technique (500) received via the receiving port (400) for output via the transmitting port (405) or to forward the message with the second addressing technique (510) received via the receiving port (400) for output via the transmitting port (405).

10. Automation network (100),
wherein the automation network (100) comprises automation network subscribers (300),
wherein at least one automation network subscriber (300) is in the form of a master subscriber (105) that outputs messages with a first addressing technique (500) and messages with a second addressing technique (510) to the automation network subscribers (300) via a data line network (200), and
wherein at least one automation network subscriber (300) is in the form of a network subscriber (115) according to one of Claims 1 to 9.

## Revendications

1. Membre de réseau (115) pour un réseau d'automatisation (100) qui présente au moins un port de réception (400) et au moins un port d'émission (405) auxquels d'autres membres de réseau d'automatisation (300) peuvent être connectés par l'intermédiaire d'un réseau de lignes de données (200),
le membre de réseau (115) étant configuré pour recevoir par l'intermédiaire du port de réception (400) et pour émettre par l'intermédiaire du port d'émission (405) des télégrammes avec une première technique d'adressage (500) qui sont réalisés sous forme de télégrammes de passage pour le traitement au passage pour le membre de réseau (115) et d'autres membres de réseau d'automatisation (300), et des télégrammes avec une deuxième technique d'adressage (510) qui sont réalisés sous forme de télégrammes individuels pour le traitement par un seul membre de réseau d'automatisation (300),
le membre de réseau (115) comprenant une première unité de traitement (430) pour le traitement des télégrammes avec la première technique d'adressage (500) et une deuxième unité de traitement (440) pour le traitement des télégrammes avec la deuxième technique d'adressage (510),
le membre de réseau (115) présentant une logique de réception (410) qui est reliée au port de réception (400) et à la première unité de traitement (430) et à la deuxième unité de traitement (440), et une logique d'émission (415) qui est reliée au port d'émission (405) et à la première unité de traitement (430) et à la deuxième unité de traitement (440),
dans lequel la logique de réception (410) est configurée dans une première configuration de filtre (600) pour retransmettre à la première unité de traitement (430) des télégrammes avec la première technique d'adressage (500) reçus par l'intermédiaire du port de réception (400), et pour retransmettre à la deuxième unité de traitement (440) des télégrammes avec la deuxième technique d'adressage (510) reçus par l'intermédiaire du port de réception (400), et la logique d'émission (415) est configurée pour retransmettre au port d'émission (405) des télégrammes reçus de la première unité de traitement (430) ou de la deuxième unité de traitement (440) respectivement, ou
dans lequel la logique de réception (410) est configurée dans une deuxième configuration de filtre (610) pour doubler des télégrammes avec la première technique d'adressage (500), reçus par l'intermédiaire du port de réception (400), ou des télégrammes avec la deuxième technique d'adressage (510), reçus par l'intermédiaire du port de réception (400), et pour retransmettre respectivement un télégramme à la première unité de traitement (430) et à la deuxième unité de traitement (440), et la première unité de traitement (430) est configurée pour rejeter des télégrammes avec la deuxième technique d'adressage (510), et la deuxième unité de traitement (440) est configurée pour rejeter des télégrammes avec la première technique d'adressage (500), et la logique d'émission (415) est configurée pour retransmettre au port d'émission (405) des télégrammes reçus de la première unité de traitement (430) ou de la deuxième unité de traitement (440) respectivement, ou
dans lequel la logique de réception (410) est configurée dans une troisième configuration de filtre (615) pour doubler des télégrammes avec la première technique d'adressage (500), reçus par l'intermédiaire du port de réception (400), et des télégrammes avec la deuxième technique d'adressage (510), reçus par l'intermédiaire du port de réception (400), et pour retransmettre respectivement un télégramme à la première unité de traitement (430) et à la deuxième unité de traitement (440), et la logique d'émission (415) est configurée pour ne retransmettre au port d'émission (405) que des télégrammes avec la première technique d'adressage (500) provenant de la première unité de traitement (430) et pour rejeter des télégrammes avec la première technique d'adressage (500) provenant de la deuxième unité de traitement (440), et pour ne retransmettre au port d'émission (405) que des télégrammes avec la deuxième technique d'adressage (510) provenant de la deuxième unité de traitement (440) et pour rejeter des télégrammes avec la deuxième technique d'adressage (510) provenant de la première unité de traitement (430).

2. Membre de réseau (115) selon la revendication 1, dans lequel la logique de réception (410) est configurée dans la première configuration de filtre (600) pour distinguer les télégrammes avec la première technique d'adressage (500) et les télégrammes avec la deuxième technique d'adressage (510) sur la base d'une réalisation des télégrammes dans laquelle respectivement un en-tête des télégrammes avec la première technique d'adressage (500) est réalisé différemment d'un en-tête des télégrammes avec la deuxième technique d'adressage (510), ou
dans lequel la première unité de traitement (430) et la deuxième unité de traitement (440) sont configurées dans la deuxième configuration de filtre (610) pour distinguer les télégrammes avec la première technique d'adressage (500) et les télégrammes avec la deuxième technique d'adressage (510) sur la base de la réalisation des télégrammes dans laquelle respectivement l'en-tête des télégrammes avec la première technique d'adressage (500) est réalisé différemment de l'en-tête des télégrammes avec la deuxième technique d'adressage (510), ou
dans lequel la logique d'émission (415) est configurée dans la troisième configuration de filtre (615) pour distinguer les télégrammes avec la première technique d'adressage (500) et les télégrammes avec la deuxième technique d'adressage (510) sur la base de la réalisation des télégrammes dans laquelle respectivement l'en-tête des télégrammes avec la première technique d'adressage (500) est réalisé différemment de l'en-tête des télégrammes avec la deuxième technique d'adressage (510).

3. Membre de réseau (115) selon la revendication 1,
dans lequel la logique de réception (410) est configurée dans la première configuration de filtre (600) pour distinguer les télégrammes avec la première technique d'adressage (500) et les télégrammes avec la deuxième technique d'adressage (510) sur la base d'une fenêtre de temps définie dans laquelle respectivement les télégrammes avec la première technique d'adressage (500) ou les télégrammes avec la deuxième technique d'adressage (510) sont reçus depuis la logique de réception (410) par l'intermédiaire du port de réception (400), ou
dans lequel la première unité de traitement (430) et la deuxième unité de traitement (440) sont configurées dans la deuxième configuration de filtre (610) pour distinguer les télégrammes avec la première technique d'adressage (500) et les télégrammes avec la deuxième technique d'adressage (510) sur la base de la fenêtre de temps définie dans laquelle respectivement des télégrammes avec la première technique d'adressage (500) ou des télégrammes avec la deuxième technique d'adressage (510) sont reçus depuis la logique de réception (410) par l'intermédiaire du port de réception (400), ou
dans lequel la logique d'émission (415) est configurée dans la troisième configuration de filtre (615) pour distinguer les télégrammes avec la première technique d'adressage (500) et les télégrammes avec la deuxième technique d'adressage (510) sur la base de la fenêtre de temps définie dans laquelle respectivement des télégrammes avec la première technique d'adressage (500) ou des télégrammes avec la deuxième technique d'adressage (510) sont reçus depuis la logique de réception (410) par l'intermédiaire du port de réception (400).

4. Membre de réseau (115) selon la revendication 1,
dans lequel la logique de réception (410) est configurée dans la première configuration de filtre (600) pour distinguer les télégrammes avec la première technique d'adressage (500) et les télégrammes avec la deuxième technique d'adressage (510) sur la base d'un télégramme de commutation qui commute la retransmission par la logique de réception (410) à la première unité de traitement (430) de télégrammes avec la première technique d'adressage (500) reçus par l'intermédiaire du port de réception (400) ou à la deuxième unité de traitement (440) de télégrammes avec la deuxième technique d'adressage (510) reçus par l'intermédiaire du port de réception (400), ou
dans lequel la première unité de traitement (430) et la deuxième unité de traitement (440) sont configurées dans la deuxième configuration de filtre (610) pour distinguer les télégrammes avec la première technique d'adressage (500) et les télégrammes avec la deuxième technique d'adressage (510) sur la base du télégramme de commutation qui commute la retransmission par la première unité de traitement (430) à la logique d'émission (415) de télégrammes avec la première technique d'adressage (500) ou qui commute la retransmission par la deuxième unité de traitement (440) à la logique d'émission (415) de télégrammes avec la deuxième technique d'adressage (510), ou
dans lequel la logique d'émission (415) est configurée dans la troisième configuration de filtre (615) pour distinguer les télégrammes avec la première technique d'adressage (500) et les télégrammes avec la deuxième technique d'adressage (510) sur la base du télégramme de commutation qui commute la retransmission par la logique d'émission (415) au port d'émission (405) des télégrammes avec la première technique d'adressage (500) reçus depuis la première unité de traitement (430) ou la retransmission au port d'émission (405) des télégrammes avec la deuxième technique d'adressage (510) reçus depuis la deuxième unité de traitement (440).

5. Membre de réseau (115) selon l'une quelconque des revendications 1 à 4,
dans lequel les télégrammes avec la première technique d'adressage (500) sont réalisés sous forme de télégrammes de passage destinés au traitement par plusieurs membres de réseau d'automatisation (300), et les télégrammes avec la deuxième technique d'adressage (510) sont réalisés sous forme de télégrammes individuels destinés au traitement respectivement par un membre de réseau d'automatisation (300) individuel,
dans lequel la deuxième unité de traitement (440) du membre de réseau (115) est configurée pour vérifier respectivement à l'aide d'une adresse cible des télégrammes individuels si un télégramme individuel est destiné au membre de réseau (115),
dans lequel, si l'adresse cible d'un télégramme individuel coïncide respectivement avec une adresse matérielle du membre de réseau (115), la deuxième unité de traitement (440) est configurée pour traiter le télégramme individuel, et
dans lequel la deuxième unité de traitement (440) est par ailleurs configurée pour retransmettre le télégramme individuel à la logique d'émission (415) en vue d'une sortie par l'intermédiaire du port d'émission (405) .

6. Membre de réseau (115) selon la revendication 5,
dans lequel les télégrammes de passage sont réalisés sous forme de télégrammes EtherCAT et les télégrammes individuels sont réalisés sous forme de télégrammes Ethernet.

7. Membre de réseau (115) selon l'une quelconque des revendications 1 à 6,
dans lequel la deuxième unité de traitement (440) est en outre configurée pour générer des télégrammes avec la deuxième technique d'adressage (510) et pour retransmettre les télégrammes avec la deuxième technique d'adressage (510) à la logique d'émission (415) en vue d'une sortie par l'intermédiaire du port d'émission (405).

8. Membre de réseau (115) selon la revendication 7,
dans lequel le membre de réseau (115) est configuré, lorsque le membre de réseau (115) reçoit en même temps par l'intermédiaire du port de réception (400) un télégramme avec la première technique d'adressage (500) ou un télégramme avec la deuxième technique d'adressage (510), pour mettre en mémoire tampon le télégramme avec la première technique d'adressage (500) reçu par l'intermédiaire du port de réception (400) ou le télégramme avec la deuxième technique d'adressage (510) reçu par l'intermédiaire du port de réception (400), et la logique d'émission (415) est configurée pour retransmettre le télégramme avec la deuxième technique d'adressage (510) généré par la deuxième unité de traitement (440) en vue d'une sortie par l'intermédiaire du port d'émission (405), ou
dans lequel le membre de réseau (115) est en outre configuré, lorsque le membre de réseau (115) reçoit en même temps par l'intermédiaire du port de réception (400) un télégramme avec la première technique d'adressage (500) ou un télégramme avec la deuxième technique d'adressage (510), pour fragmenter le télégramme avec la deuxième technique d'adressage (510) généré par la deuxième unité de traitement (440) et pour retransmettre par la logique d'émission (415) le télégramme avec la première technique d'adressage (500) reçu par l'intermédiaire du port de réception (400) en vue d'une sortie par l'intermédiaire du port d'émission (405), ou pour transmettre par la logique d'émission (415) le télégramme avec la deuxième technique d'adressage (510) reçu par l'intermédiaire du port de réception (400) en vue d'une sortie par l'intermédiaire du port d'émission (405).

9. Membre de réseau (115) selon la revendication 8,
dans lequel la logique d'émission (415) du membre de réseau (115) est configurée, lorsque le membre de réseau (115) reçoit en même temps par l'intermédiaire du port de réception (400) un télégramme avec la première technique d'adressage (500) ou un télégramme avec la deuxième technique d'adressage (510), pour mettre en mémoire tampon le télégramme avec la première technique d'adressage (500) reçu par l'intermédiaire du port de réception (400) ou le télégramme avec la deuxième technique d'adressage (510) reçu par l'intermédiaire du port de réception (400), et pour retransmettre le télégramme avec la deuxième technique d'adressage (510) généré par la deuxième unité de traitement (440) en vue d'une sortie par l'intermédiaire du port d'émission (405), ou dans lequel la logique d'émission (415) du membre de réseau (115) est en outre configurée, lorsque le membre de réseau (115) reçoit en même temps par l'intermédiaire du port de réception (400) un télégramme avec la première technique d'adressage (500) ou un télégramme avec la deuxième technique d'adressage (510), pour fragmenter le télégramme avec la deuxième technique d'adressage (510) généré par la deuxième unité de traitement (440) et pour retransmettre le télégramme avec la première technique d'adressage (500) reçu par l'intermédiaire du port de réception (400) en vue d'une sortie par l'intermédiaire du port d'émission (405) ou pour retransmettre le télégramme avec la deuxième technique d'adressage (510) reçu par l'intermédiaire du port de réception (400) en vue d'une sortie par l'intermédiaire du port d'émission (405).

10. Réseau d'automatisation (100),
dans lequel le réseau d'automatisation (100) comprend des membres de réseau d'automatisation (300),
au moins un membre de réseau d'automatisation (300) étant configuré comme un membre maître (105) qui émet des télégrammes avec une première technique d'adressage (500) et des télégrammes avec une deuxième technique d'adressage (510) à travers un réseau de lignes de données (200) à destination des membres de réseau d'automatisation (300), et
au moins un membre de réseau d'automatisation (300) étant configuré comme un membre de réseau (115) selon l'une quelconque des revendications 1 à 9.
